(19) Europäisches Patentamt
European Patent Office
Office européen des brevets

(11) **EP 3 447 330 A1**

(12) **EUROPEAN PATENT APPLICATION**
published in accordance with Art. 153(4) EPC

(43) Date of publication:
**27.02.2019 Bulletin 2019/09**

(21) Application number: **17855425.9**

(22) Date of filing: **01.08.2017**

(51) Int Cl.:
**F16F 15/134** *(2006.01)*　　**F16H 45/02** *(2006.01)*

(86) International application number:
**PCT/JP2017/027828**

(87) International publication number:
**WO 2018/061467 (05.04.2018 Gazette 2018/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **30.09.2016 JP 2016193086**

(71) Applicant: **AISIN AW CO., LTD.**
**Anjo-shi, Aichi 444-1192 (JP)**

(72) Inventors:
• **ITO, Kazuyoshi**
**Anjo-shi**
**Aichi 444-1192 (JP)**

• **NAGAI, Hiroki**
**Anjo-shi**
**Aichi 444-1192 (JP)**
• **WAJIMA, Masaki**
**Anjo-shi**
**Aichi 444-1192 (JP)**
• **ITOU, Kazuhiro**
**Anjo-shi**
**Aichi 444-1192 (JP)**

(74) Representative: **Kramer Barske Schmidtchen**
**Patentanwälte PartG mbB**
**European Patent Attorneys**
**Landsberger Strasse 300**
**80687 München (DE)**

(54) **DAMPER DEVICE**

(57)　　A damper device 10 includes first inner springs SP11 that transmit torque between a drive member 11 and a first intermediate member 12, second inner springs SP12 that transmit torque between the first intermediate member 12 and a driven member 16, first outer springs SP21 that transmit torque between the drive member 11 and a second intermediate member 14, and second outer springs SP22 that transmit torque between the second intermediate member 14 and the driven member 16. Either or both of the first and second outer springs SP21, SP22 corresponding to the second intermediate member 14 having a higher natural frequency than the first intermediate member 12 are disposed radially outside the first and second inner springs SP11, SP12 corresponding to the first intermediate member 12.

FIG. 1

**Description**

TECHNICAL FIELD

The invention of the present disclosure relates to damper devices including an input element to which power from an engine is transmitted, and an output element.

BACKGROUND ART

Conventionally, double path dampers for use in association with torque converters are known as this type of damper device (see, e.g., Patent Document 1). In this damper device, a vibration path from an engine and a lockup clutch to an output hub is divided into two parallel vibration paths B, C and each of the two vibration paths B, C has a pair of springs and a separate intermediate flange disposed between the pair of springs. A turbine of a torque converter is connected to the intermediate flange of the vibration path B so that the natural frequency varies between the two vibration paths. The natural frequency of the intermediate flange of the vibration path B is lower than that of the intermediate flange of the vibration path C. In such a damper device, when the lockup clutch is engaged, vibration form the engine enters the two vibration paths B, C of the damper device. When the engine vibration with a certain frequency reaches the vibration path B including the intermediate flange connected to the turbine, the phase of the vibration from the intermediate flange of the vibration path B to the output hub is shifted by 180 degrees with respect to that of the input vibration. Since the natural frequency of the intermediate flange of the vibration path C is higher than that of the intermediate flange of the vibration path B, the vibration having entered the vibration path C is transmitted to the output hub without any phase shift. The vibration transmitted to the output hub through the vibration path B is thus 180 degrees out of phase with respect to the vibration transmitted to the output hub through the vibration path C, whereby damped vibration can be obtained at the output hub.

Related Art Documents

Patent Documents

Patent Document 1: Published Japanese Translation of PCT Application No. 2012-506006 (JP 2012-506006 A)

SUMMARY OF THE INVENTION

In order to improve vibration damping capability of the double path damper described in Patent Document 1, it is necessary to adjust the spring constants of the elastic bodies on both sides of each intermediate flange and the weight of each intermediate flange to properly set the natural frequencies of the vibration paths B, C. However, in the case where the spring constants of the elastic bodies are adjusted to properly set the natural frequencies of the vibration paths B, C, the overall stiffness of the double path damper is significantly varied. Moreover, in the case where the weight of the intermediate flange and the weight of the turbine connected thereto are adjusted to properly set the two natural frequencies, the weights of the flange and the turbine and thus the overall weight of the torque converter are increased. In the double path damper described in Patent Document 1, it is therefore difficult to achieve reduction in stiffness while restraining an increase in weight, and even this double path damper may not be able to satisfactorily damp vibration to be damped, depending on the frequency of the vibration.

It is a primary object of the invention of the present disclosure to improve vibration damping capability by achieving reduction in stiffness of a damper device while restraining an increase in weight.

A damper device of the present disclosure is a damper device including an input element to which torque from an engine is transmitted, a first intermediate element, a second intermediate element, an output element, a first elastic body that transmits the torque between the input element and the first intermediate element, a second elastic body that transmits the torque between the first intermediate element and the output element, a third elastic body that transmits the torque between the input element and the second intermediate element, and a fourth elastic body that transmits the torque between the second intermediate element and the output element. A natural frequency of the second intermediate element at the time the torque is transmitted from the input element to the output element via the third and fourth elastic bodies is higher than that of the first intermediate element at the time the torque is transmitted from the input element to the output element via the first and second elastic bodies, and at least one of the third and fourth elastic bodies is disposed radially outside the first and second elastic bodies.

In this damper device, one of the third and fourth elastic bodies corresponding to the second intermediate element having a higher natural frequency is disposed radially outside the first and second elastic bodies corresponding to the first intermediate element having a lower natural frequency, whereby equivalent stiffness of the damper device can further be reduced. Reduction in stiffness of the damper device can thus be achieved while restraining an increase in weight which is associated with adjustment of the natural frequencies of the first and second intermediate elements, whereby vibration damping capability can be improved.

BRIEF DESCRIPTION OF THE DRAWINGS

FIG. 1 is a schematic configuration diagram showing a starting device including a damper device of the present disclosure.
FIG. 2 is a sectional view showing the damper device of the present disclosure.
FIG. 3 is a schematic view illustrating the average mounting radii of first to fourth elastic bodies in the damper device of the present disclosure.
FIG. 4 is an illustration showing the relationship between the engine speed and the theoretical torque fluctuation in an output element of the damper device.
FIG. 5 is a sectional view showing another damper device of the present disclosure.
FIG. 6 is a sectional view showing still another damper device of the present disclosure.
FIG. 7 is a sectional view showing yet another damper device of the present disclosure.
FIG. 8 is a sectional view showing a further damper device of the present disclosure.

MODES FOR CARRYING OUT THE INVENTION

Modes for carrying out the invention of the present disclosure will be described below with reference to the accompanying drawings.

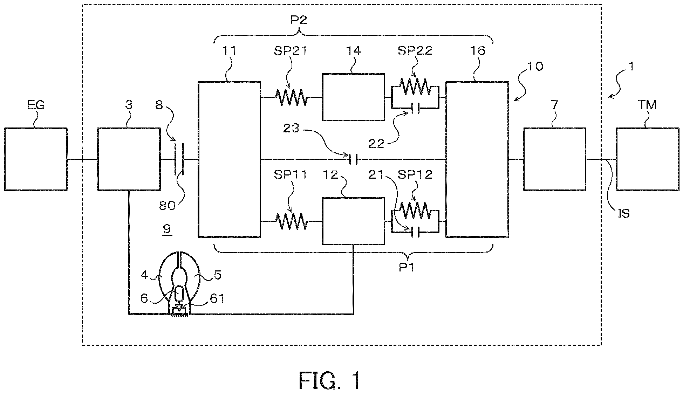

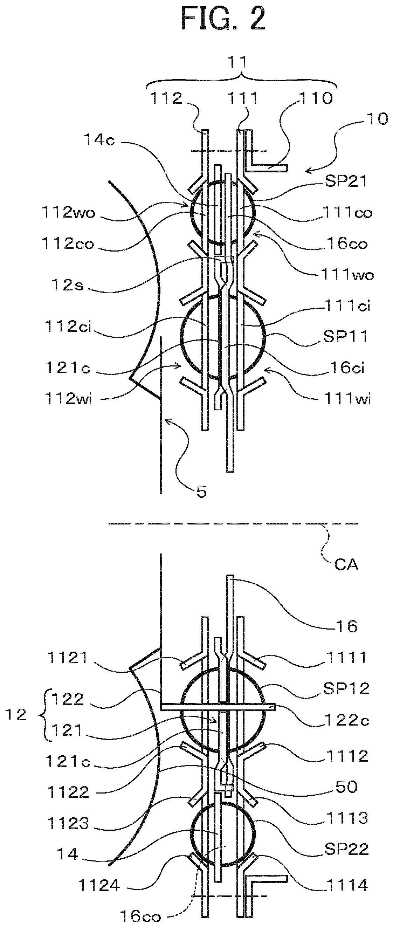

FIG. 1 is a schematic configuration diagram showing a starting device 1 including a damper device 10 of the present disclosure, and FIG. 2 is a sectional view showing the damper device 10. The starting device 1 shown in FIG. 1 is mounted on a vehicle including an engine (in the present embodiment, an internal combustion engine) EG serving as a motor. The starting device 1 includes, in addition to the damper device 10, a front cover 3 coupled to a crankshaft of the engine EG, a pump impeller (input-side hydraulic transmission element) 4 fixed to the front cover 3, a turbine runner (output-side hydraulic transmission element) 5 capable of rotating coaxially with the pump impeller 4, a damper hub 7 coupled to the damper device 10 and fixed to an input shaft IS of a transmission (power transmission device) TM, which is an automatic transmission (AT), a continuously variable transmission (CVT), a dual-clutch transmission (DCT), a hybrid transmission, or a reduction gear, and serving as a power output member, a lockup clutch 8, etc.

In the following description, the "axial direction" basically refers to the direction in which the central axis CA (axis, see FIG. 2) of the starting device 1 or the damper device 10 extends, unless otherwise specified. The "radial direction" basically refers to the radial direction of the starting device 1, the damper device 10, or rotary elements of the damper device 10 etc., namely the direction of a straight line extending perpendicularly (in the direction of the radius) from the central axis CA of the starting device 1 or the damper device 10, unless otherwise specified. The "circumferential direction" basically refers to the circumferential direction of the starting device 1, the damper device 10, or the rotary elements of the damper device 10 etc., namely the direction along the rotation direction of the rotary elements, unless otherwise specified.

The pump impeller 4 has a pump shell, not shown, firmly fixed to the front cover 3 and a plurality of pump blades (not shown) formed on the inner surface of the pump shell. The turbine runner 5 has a turbine shell 50 (see FIG. 2) and a plurality of turbine blades (not sown) formed on the inner surface of the turbine shell 50. An inner peripheral portion of the turbine shell 50 is fixed to a turbine hub, not shown, via a plurality of rivets, and the turbine hub is rotatably supported by the damper hub 7.

The pump impeller 4 and the turbine runner 5 face each other, and a stator 6 that adjusts the flow of hydraulic oil (working fluid) from the turbine runner 5 to the pump impeller 4 is coaxially disposed between the pump impeller 4 and the turbine runner 5. The stator 6 has a plurality of stator blades, not shown, and the stator 6 is allowed to rotate only in one direction by a one-way clutch 61. The pump impeller 4, the turbine runner 5, and the stator 6 form a torus (annular flow path) where hydraulic oil is circulated, and function as a torque converter (hydraulic transmission device) having a torque amplifying function. In the starting device 1, the stator 6 and the one-way clutch 61 may be omitted, and the pump impeller 4 and the turbine runner 5 may function as a fluid coupling.

The lockup clutch 8 performs lockup coupling, namely couples the front cover 3 to the damper hub 7 via the damper device 10, and releases the lockup coupling. In the present embodiment, the lockup clutch 8 is a single-plate hydraulic clutch and has a lockup piston (power input member) 80 that is disposed inside the front cover 3 at a position near the inner wall surface of the front cover 3 on the engine EG side and that is fitted on the damper hub 7 so as to be movable in the axial direction. A friction material, not shown, is bonded to an outer peripheral portion of the surface of the lockup piston 80 on the front cover 3 side. A lockup chamber (not shown), which is connected to a hydraulic control device, not shown, via a hydraulic oil supply passage and an oil passage formed in the input shaft IS, is defined between the lockup piston 80 and the front cover 3.

Hydraulic oil from the hydraulic control device, which is supplied radially outward from the axis side of the pump impeller 4 and the turbine runner 5 (from around the one-way clutch 61) to the pump impeller 4 and the turbine runner 5 (torus) via the oil passage formed in the input shaft IS etc. can flow into the lockup chamber of the lockup clutch 8. Accordingly, if the oil pressure in a hydraulic transmission chamber 9 defined by the front cover 3 and the pump shell of the pump impeller 4 and the oil pressure in the lockup chamber are kept equal to each other, the lockup piston 80 does not move toward the front cover 3 and the lockup piston 80 does not frictionally engage with the front cover 3. On the other hand, if the oil pressure in the hydraulic transmission chamber 9 is made higher than that in the lockup chamber by the hydraulic control device, not shown, the lockup piston 80 moves toward the front cover 3 due to the pressure difference and frictionally engages with the front cover 3. The front cover 3 (engine EG) is thus coupled to the damper hub 7 via the lockup piston 80 and the damper device 10. The lockup clutch 8 may be a multi-plate hydraulic clutch including at least one friction engagement plate (a plurality of friction materials). In this case, a clutch drum or a clutch hub of the multi-plate hydraulic clutch functions as a power input member.

The damper device 10 damps vibration between the engine EG and the transmission TM, and as shown in FIG. 1, includes, as the rotary elements (rotary members, i.e., rotary mass bodies) that coaxially rotate relative to each other, a drive member (input element) 11, a first intermediate member (first intermediate element) 12, a second intermediate member (second intermediate element) 14, and a driven member (output element) 16. The damper device 10 further includes, as torque transmission elements (torque transmission elastic bodies), a plurality of (e.g., three in the present embodiment) first inner springs (first elastic bodies) SP11 that are disposed between the drive member 11 and the first intermediate member 12 and transmit rotational torque (torque in the rotation direction), a plurality of (e.g., three in the present embodiment) second inner springs (second elastic bodies) SP12 that are disposed between the first intermediate member 12 and the driven member 16 and transmit rotational torque (torque in the rotation direction), a plurality of (e.g., three in the present embodiment) first outer springs (third elastic bodies) SP21 that are disposed between the drive member 11 and the second intermediate member 14 and transmit rotational torque, and a plurality of (e.g., three in the present embodiment) second outer springs (fourth elastic bodies) SP22 that are disposed between the second intermediate member 14 and the driven member 16 and transmit rotational torque.

In the present embodiment, the first and second inner springs SP11, SP12 and the first and second outer springs SP21, SP22 are linear coil springs made of a metal material wound in a helical pattern so as to have a straight axis when not under load. As compared to the case where arc coil springs are used, the springs SP11 to SP22 can be more properly extended and contracted along their axes, and hysteresis due to the frictional force generated between the spring transmitting torque and the rotary element, namely the difference between torque that is output when input torque to the drive member 11 increases and torque that is output when the input torque to the drive member 11 decreases, can be reduced. The hysteresis can be quantified by the difference between torque that is output from the driven member 16 when the torsion angle of the damper device 10 becomes equal to a predetermined angle with input torque to the drive member 11 increasing and torque that is output from the driven member 16 when the torsion angle of the damper device 10 becomes equal to the predetermined angle with the input torque to the drive member 11 decreasing. At least one of the springs SP11 to SP22 may be an arc coil spring. The "axis of the spring" means the winding center of a metal material etc. wound in a helical pattern in a linear coil spring and an arc coil spring.

In the present embodiment, the first and second outer springs SP21, SP22 are disposed in an outer peripheral region of the hydraulic transmission chamber 9 such that the first and second outer springs SP21, SP22 are paired (each pair acts in series), are alternately arranged in the circumferential direction of the damper device 10 (second intermediate member 14), and are located near the outer periphery of the starting device 1. This allows the first and second outer springs SP21, SP22 to have a satisfactory torsion angle (stroke). The first and second inner springs SP11, SP12 are disposed radially inside the first and second outer springs SP21, SP22 such that the first and second inner springs SP11, SP12 are paired (each pair acts in series) and are alternately arranged in the circumferential direction of the damper device 10 (first intermediate member 12). The first and second inner springs SP11, SP12 are surrounded by the first and second outer springs SP21, SP22.

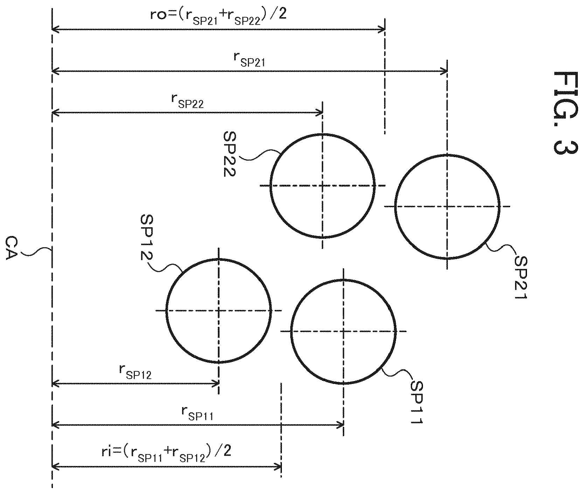

Accordingly, in the damper device 10, the average mounting radius ro of the first and second outer springs SP21, SP22 is larger than the average mounting radius ri of the first and second inner springs SP11, SP12. As shown in FIG. 3, the average mounting radius ro of the first and second outer springs SP21, SP22 is an average value (= (rSP21 + rSP22/2) of the mounting radius rSP21 of the first outer spring (third elastic body) SP21, which is the distance from the central axis CA of the damper device 10 to the axis of the first outer spring SP21, and the mounting radius rSP22 of the second outer spring (fourth elastic body) SP22, which is the distance from the central axis CA to the axis of the second outer spring SP22. As shown in FIG. 3, the average mounting radius ri of the first and second inner springs SP11, SP12 is an average value (= (rSP11 + rSP12/2) of the mounting radius rSP11 of the first inner spring (first elastic body) SP11, which is the distance from the central axis CA to the axis of the first inner spring SP11, and the mounting radius rSP12 of the second inner spring (second elastic body) SP12, which is the distance from the central axis CA to the axis of the second inner spring SP12. The mounting radius rSP11, rSP12, rSP21, or rSP22 may be the distance between the central axis CA and a predetermined point (e.g., a middle or an end in the axial direction) on the axis of each spring SP11, SP12, SP21, SP22.

In the present embodiment, the first and second outer springs SP21, SP22 are arranged on the same circumference so that the mounting radius rSP21 is equal to the mounting radius rSP22. The axes of the first outer springs SP21 and the axes of the second outer springs SP22 are included in a single plane perpendicular to the central axis CA. Moreover, in the present embodiment, the first and second inner springs SP11, SP12 are arranged on the same circumference so that the mounting radius rSP11 is equal to the mounting radius rSP12. The axes of the first inner springs SP11 and the axes of the second inner springs SP12 are included in a single plane perpendicular to the central axis CA. In addition, in the damper device 10, the first and second inner springs SP11, SP12 are disposed radially inside the first and second outer springs SP21, SP22 so as to overlap the first and second outer springs SP21, SP22 in the axial direction as viewed in the radial direction. The damper device 10 thus becomes compact in the radial direction, and the axial length of the damper device 10 can further be reduced.

As shown in FIG. 3, the mounting radius rSP21 from the central axis CA to the axis of the first outer spring SP21 may be different from the mounting radius rSP22 from the central axis CA to the axis of the second outer spring SP22. The mounting radius rSP11 from the central axis CA to the axis of the first inner spring SP11 may be different from the mounting radius rSP12 from the central axis CA to the axis of the second inner spring SP12. That is, the mounting radius rSP21, rSP22 of at least one of the first and second outer springs SP21, SP22 may be larger than the mounting radius rSP11, rSP12 of at least one of the first and second inner springs SP11, SP12. The axis of the first outer spring SP21 and the axis of the second outer spring SP22 may not be included in a single plane perpendicular to the central axis CA. The axis of the first inner spring SP11 and the axis of the second inner spring SP12 may not be included in a single plane perpendicular to the central axis CA. The axes of the springs SP11, SP12, SP21, and SP22 may be included in a single plane perpendicular to the central axis CA, and the axis of at least one of the springs SP11, SP12, SP21, and SP22 may not be included in the single plane.

In the present embodiment, spring constants k11, k12, k21, and k22 are selected to satisfy the relationship k12 < k21 = k22 < k11, where "k11" represents the stiffness, namely the spring constant, of the first inner springs SP11, "k12" represents the stiffness, namely the spring constant, of the second inner springs SP12, "k21" represents the stiffness, namely the spring constant, of the first outer springs SP21, and "k22" represents the stiffness, namely the spring constant, of the second outer springs SP22.

As shown in FIG. 2, the drive member 11 of the damper device 10 includes: an annular coupling member 110 fixed to the lockup piston 80 of the lockup clutch 8; an annular first plate member (first input member) 111 rotatably supported (aligned) by, e.g., the damper hub 7 and coupled to the coupling member 110 so as to rotate with the coupling member 110; and an annular second plate member (second input member) 112 disposed closer to the turbine runner 5 than the first plate member 111 is and coupled (fixed) to the first plate member 111 via a plurality of rivets (coupling elements). The drive member 11, namely the first and second plate members 111, 112, thus rotates with the lockup piston 80, and the front cover 3 (engine EG) is coupled to the drive member 11 of the damper device 10 by engagement of the lockup clutch 8. In the case where the lockup clutch 8 is a multi-plate hydraulic clutch, the coupling member 110 is formed as a clutch drum of the lockup clutch 8.

The first plate member 111 is a plate-like annular member and is disposed closer to the lockup piston 80 than the second plate member 112 is. The first plate member 111 has: a plurality of (e.g., three in the present embodiment) inner spring accommodating windows 111wi; a plurality of (e.g., three in the present embodiment) outer spring accommodating windows 111wo; a plurality of (e.g., three in the present embodiment) spring support portions 1111; a plurality of (e.g., three in the present embodiment) spring support portions 1112; a plurality of (e.g., three in the present embodiment) spring support portions 1113; a plurality of (e.g., three in the present embodiment) spring support portions 1114; a plurality of (e.g., three in the present embodiment) inner spring contact portions 111ci; and a plurality of (e.g., three in the present embodiment) outer spring contact portions 111co.

The plurality of inner spring accommodating windows 111wi, each in the shape of a circular arc, are formed at intervals (regular intervals) in the circumferential direction in an inner peripheral portion of the first plate member 111. The plurality of spring support portions 1111, each extending along the inner peripheral edge of a corresponding one of the inner spring accommodating windows 111wi, are formed at intervals (regular intervals) in the circumferential direction. The plurality of spring support portions 1112, each extending along the outer peripheral edge of a corresponding one of the inner spring accommodating windows 111wi, are formed at intervals (regular intervals) in the circumferential direction such that each spring support portion 1112 faces a corresponding one of the spring support portions 1111 in the radial direction of the first plate member 111. The inner spring contact portions 111ci are formed such that one inner spring contact portion 111ci is located between two inner spring accommodating windows 111wi (spring support portions 1111, 1112) which are adjacent to each other in the circumferential direction.

The plurality of outer spring accommodating windows 111wo, each in the shape of a circular arc, are formed at intervals in the circumferential direction in an outer peripheral portion of the first plate member 111 so as to be located radially outside the inner spring accommodating windows 111wi. The plurality of spring support portions 1113, each extending along the inner peripheral edge of a corresponding one of the outer spring accommodating windows 111wo, are formed at intervals (regular intervals) in the circumferential direction. The plurality of spring support portions 1114, each extending along the outer peripheral edge of a corresponding one of the outer spring accommodating windows 111wo, are formed at intervals (regular intervals) in the circumferential direction such that each spring support portion 1114 faces a corresponding one of the spring support portions 1113 in the radial direction of the first plate member 111. The outer spring contact portions 111co are formed such that one outer spring contact portion 111co is located two outer spring accommodating windows 111wo (spring support portions 1113, 1114) which are adjacent to each other in the circumferential direction.

The second plate member 112 is a plate-like annular member and is disposed closer to the turbine runner 5 than the first plate member 111 is. The second plate member 112 has: a plurality of (e.g., three in the present embodiment) inner spring accommodating windows 112wi; a plurality of (e.g., three in the present embodiment) outer spring accommodating windows 112wo; a plurality of (e.g., three in the present embodiment) spring support portions 1121; a plurality of (e.g., three in the present embodiment) spring support portions 1122; a plurality of (e.g., three in the present embodiment) spring support portions 1123; a plurality of (e.g., three in the present embodiment) spring support portions 1124; a plurality of (e.g., three in the present embodiment) inner spring contact portions 112ci; and a plurality of (e.g., three in the present embodiment) outer spring contact portions 112co.

The plurality of inner spring accommodating windows 112wi, each in the shape of a circular arc, are formed at intervals (regular intervals) in the circumferential direction in an inner peripheral portion of the second plate member 112. The plurality of spring support portions 1121, each extending along the inner peripheral edge of a corresponding one of the inner spring accommodating windows 112wi, are formed at intervals (regular intervals) in the circumferential direction. The plurality of spring support portions 1122, each extending along the outer peripheral edge of a corresponding one of the inner spring accommodating windows 112wi, are formed at intervals (regular intervals) in the circumferential direction such that each spring support portion 1122 faces a corresponding one of the spring support portions 1121 in the radial direction of the second plate member 112. The inner spring contact portions 112ci are formed such that one inner spring contact portion 112ci is located between two inner spring accommodating windows 112wi (spring support portions 1121, 1122) which are adjacent to each other in the circumferential direction.

The plurality of outer spring accommodating windows 112wo, each in the shape of a circular arc, are formed at intervals in the circumferential direction in an outer peripheral portion of the second plate member 112 so as to be located radially outside the inner spring accommodating windows 112wi. The plurality of spring support portions 1123, each extending along the inner peripheral edge of a corresponding one of the outer spring accommodating windows 112wo, are formed at intervals (regular intervals) in the circumferential direction. The plurality of spring support portions 1124, each extending along the outer peripheral edge of a corresponding one of the outer spring accommodating windows 112wo, are formed at intervals (regular intervals) in the circumferential direction such that each spring support portion 1124 faces a corresponding one of the spring support portions 1123 in the radial direction of the second plate member 112. The outer spring contact portions 112co are formed such that one outer spring contact portion 112co is located between two outer spring accommodating windows 112wo (spring support portions 1123, 1124) which are adjacent to each other in the circumferential direction.

As shown in FIG. 2, the first intermediate member 12 includes a plate-like annular member 121 disposed between the first and second plate members 111, 112 of the drive member 11 in the axial direction and rotatably supported (aligned) by, e.g., the damper hub 7, and a coupling member 122 fixed to the turbine runner 5. The annular member 121 that forms the first intermediate member 12 has a plurality of (e.g., three in the present embodiment) spring accommodating windows, a plurality of (e.g., three in the present embodiment) spring contact portions 121c formed at intervals in the circumferential direction, and a short cylindrical support portion 12s formed radially outside the spring contact portions 121c and extending in the axial direction. The plurality of spring contact portions 121c are formed such that one spring contact portion 121c is located between two spring accommodating windows which are adjacent to each other in the circumferential direction.

The coupling member 122 that forms the first intermediate member 12 has an annular fixed portion (annular portion) fixed to the turbine shell 50 of the turbine runner 5 by, e.g., welding, and a plurality of (e.g., three at 120° intervals in the present embodiment) spring contact portions 122c formed at intervals in the circumferential direction and extended in the axial direction from an outer peripheral portion of the fixed portion. As shown in FIG. 2, each spring contact portion 122c of the coupling member 122 is inserted from the turbine runner 5 side into a corresponding one of the inner spring accommodating windows 112wi of the second plate member 112 and is fitted in a corresponding recess formed in an end face (contact surface with the spring) of the spring contact portion 121c of the annular member 121. The annular member 121 and the coupling member 122 fixed to the turbine runner 5 are thus coupled so as to rotate together.

The second intermediate member 14 is a plate-like annular member and has a smaller moment of inertia than the annular member 121 of the first intermediate member 12. As shown in FIG. 2, the second intermediate member 14 includes a plurality of (e.g., two at 180° intervals in the present embodiment) spring contact portions 14c formed at intervals in the circumferential direction and extended radially inward from its annular outer peripheral portion. The second intermediate member 14 is disposed between the first and second plate members 111, 112 of the drive member 11 in the axial direction, and the inner peripheral surfaces of the spring contact portions 14c are rotatably supported (aligned) by the outer peripheral surface of the support portion 12s of the annular member 121 (first intermediate member 12).

The driven member 16 is a plate-like annular member and, as shown in FIG. 2, is disposed between the first plate member 111 and the second plate member 112 of the drive member 11 in the axial direction and is fixed to the damper hub 7 via a plurality of rivets. The driven member 16 thus rotates with the damper hub 7. The driven member 16 has: a plurality of (e.g., three in the present embodiment) spring accommodating windows formed at intervals (regular intervals) in the circumferential direction and each extending in the shape of a circular arc along the inner peripheral edge of the driven member 16; a plurality of (e.g., three in the present embodiment) inner spring contact portions (inner contact portions) 16ci formed at intervals (regular intervals) in the circumferential direction; and a plurality of (e.g., three in the present embodiment) outer spring contact portions (outer contact portions) 16co. The plurality of inner spring contact portions 16ci are formed such that one inner spring contact portion 16ci is located between two spring accommodating windows which are adjacent to each other in the circumferential direction. The plurality of outer spring contact portions 16co are formed radially outside the plurality of inner spring contact portions 16ci at intervals in the circumferential direction and extend in the radial direction.

The first and second inner springs SP11, SP12 are supported by corresponding spring support portions 1111, 1112, 1121, 1122 of the drive member 11, namely the first and second plate members 111, 112, such that the first and second inner springs SP11, SP12 are paired (each pair acts in series) and are alternately arranged in the circumferential direction (the circumferential direction of the annular member 121). That is, as shown in FIG. 2, each of the plurality of spring support portions 1111 of the first plate member 111 supports (guides) the sides corresponding first and second inner springs SP11, SP12 (one each) on the lockup piston 80 side of from inside in the radial direction. Each of the plurality of spring support portions 1112 supports (guides) the sides of corresponding first and second inner springs SP11, SP12 on the lockup piston 80 side from outside in the radial direction. Moreover, as shown in FIG. 2, each of the plurality of spring support portions 1121 of the second plate member 112 supports (guides) the sides of corresponding first and second inner springs SP11, SP12 (one each) on the turbine runner 5 side from inside in the radial direction. Each of the plurality of spring support portions 1122 supports (guides) the sides of corresponding first and second inner springs SP11, SP12 on the turbine runner 5 side from outside in the radial direction.

Moreover, in the damper device 10 mounted in position, each inner spring contact portion 111ci of the first plate member 111 is located between the first and second inner springs SP11, SP12 that are disposed in different inner spring accommodating windows 111wi from each other and are not paired (do not act in series), and contacts the ends of these two first and second inner springs SP11, SP12 in the circumferential direction (ends in the deflection direction). Similarly, in the damper device 10 mounted in position, each inner spring contact portion 112ci of the second plate member 112 is also located between the first and second inner springs SP11, SP12 that are disposed in different inner spring accommodating windows 112wi from each other (that are not paired), and contacts the ends of these two first and second inner springs SP11, SP12 in the circumferential direction. Each spring contact portion 121c and each spring contact portion 122c of the annular member 121 and the coupling member 122 which form the first intermediate member 12 are located between the first and second inner springs SP11, SP12 that are paired (act in series), and contact the ends of this pair of first and second inner springs SP11, SP12 in the circumferential direction.

That is, in the damper device 10 mounted in position, one end of each first inner spring SP11 contacts corresponding inner spring contact portions 111ci, 112ci of the drive member 11, and the other end of each first inner spring SP11 contacts corresponding spring contact portions 121c, 122c of the first intermediate member 12. Moreover, in the damper device 10 mounted in position, one end of each second inner spring SP12 contacts corresponding spring contact portions 121c, 122c of the first intermediate member 12, and the other end of each second inner spring SP12 contacts corresponding inner spring contact portions 111ci, 112ci of the drive member 11.

On the other hand, the first and second outer springs SP21, SP22 are supported by corresponding spring support portions 1113, 1114, 1123, 1124 of the drive member 11, namely the first and second plate members 111, 112, such that the first and second outer springs SP21, SP22 are paired (each pair acts in series) and are alternately arranged in the circumferential direction (the circumferential direction of the second intermediate member 14). That is, as shown in FIG. 2, each of the plurality of spring support portions 1113 of the first plate member 111 supports (guides) the sides of corresponding first and second outer springs SP21, SP22 (one each) on the lockup piston 80 side from inside in the radial direction. Each of the plurality of spring support portions 1114 supports (guides) the sides of corresponding first and second outer springs SP21, SP22 on the lockup piston 80 side from outside in the radial direction. Moreover, as shown in FIG. 2, each of the plurality of spring support portions 1123 of the second plate member 112 supports (guides) the sides of corresponding first and second outer springs SP21, SP22 (one each) on the turbine runner 5 side from inside in the radial direction. Each of the plurality of spring support portions 1124 supports (guides) the sides of corresponding first and second outer springs SP21, SP22 on the turbine runner 5 side from outside in the radial direction.

Moreover, in the damper device 10 mounted in position, each outer spring contact portion 111co of the first plate member 111 is located between the first and second outer springs SP21, SP22 that are disposed in different inner spring accommodating windows 111wi from each other and are not paired (do not act in series), and contacts the ends of these two first and second outer springs SP21, SP22 in the circumferential direction. Similarly, in the damper device 10 mounted in position, each outer spring contact portion 112co of the second plate member 112 is also located between the first and second outer springs SP21, SP22 that are disposed in different inner spring accommodating windows 112wi from each other (that are not paired), and contacts the ends of these two first and second outer springs SP21, SP22 in the circumferential direction. Each spring contact portion 14c of the second intermediate member 14 is located between the first and second outer springs SP21, SP22 that are paired (act in series), and contact the ends of this pair of first and second outer springs SP21, SP22 in the circumferential direction.

That is, in the damper device 10 mounted in position, one end of each first outer spring SP21 contacts corresponding outer spring contact portions 111co, 112co of the drive member 11, and the other end of each first outer spring SP21 contacts a corresponding spring contact portion 14c of the second intermediate member 14. Moreover, in the damper device 10 mounted in position, one end of each second outer spring SP22 contacts a corresponding spring contact portion 14c of the second intermediate member 14, and the other end of each second outer spring SP22 contacts corresponding outer spring contact portions 111co, 112co of the drive member 11.

Like the inner spring contact portions 111ci, 112ci of the drive member 11, in the damper device 10 mounted in position, each inner spring contact portion 16ci of the driven member 16 is located between the first and second inner springs SP11, SP12 that are not paired (do not act in series), and contacts the ends of these two first and second inner springs SP11, SP12 in the circumferential direction. Moreover, like each outer spring contact portion 111co, 112co of the drive member 11, each outer spring contact portion 16co of the driven member 16 is located between the first and second outer springs SP21, SP22 that are not paired (do not act in series), and contacts the ends of these two first and second outer springs SP21, SP22 in the circumferential direction.

That is, in the damper device 10 mounted in position, each of one end of each first inner spring SP11 and the other end of the second inner spring SP12 that is paired with this first inner spring SP11 contacts a corresponding inner spring contact portion 16ci of the driven member 16, and each of one end of each first outer spring SP21 and the other end of the second outer spring SP22 that is paired with this first outer spring SP21 contacts a corresponding outer spring contact portion 16co of the driven member 16. In the damper device 10 mounted in position, the driven member 16 is thus coupled to the drive member 11 via the plurality of first inner springs SP11, the first intermediate member 12 (the annular member 121 and the coupling member 122), and the plurality of second inner springs SP12 and is coupled to the drive member 11 via the plurality of first outer springs SP21, the second intermediate member 14, and the plurality of second outer springs SP22.

As shown in FIG. 1, the damper device 10 further includes a first stopper 21 that restricts relative rotation between the first intermediate member 12 and the driven member 16 and deflection of the second inner springs SP12, a second stopper 22 that restricts relative rotation between the second intermediate member 14 and the driven member 16 and deflection of the second outer springs SP22, and a third stopper 23 that restricts relative rotation between the drive member 11 and the driven member 16. The first and second stoppers 21, 22 approximately simultaneously restrict relative rotation between the corresponding rotary elements and deflection of the springs when input torque transmitted from the engine EG to the drive member 11 reaches predetermined torque (first threshold) T1 that is smaller than torque T2 (second threshold) corresponding to a maximum torsion angle θmax of the damper device 10. The third stopper 23 restricts relative rotation between the drive member 11 and the driven member 16 when input torque to the drive member 11 reaches the torque T2 corresponding to the maximum torsion angle θmax. The damper device 10 thus has two-step (two-stage) damping characteristics.

As can be seen from FIG. 1, with the lockup coupling being released by the lockup clutch 8 of the starting device 1 configured as described above, torque (power) transmitted from the engine to the front cover 3 is transmitted to the input shaft IS of the transmission through a path formed by the pump impeller 4, the turbine runner 5, the first intermediate member 12, the second inner springs SP12, the driven member 16, and the damper hub 7. On the other hand, with the lockup coupling being performed by the lockup clutch 8 of the starting device 1, torque transmitted from the engine to the drive member 11 via the front cover 3 and the lockup clutch 8 is transmitted to the driven member 16 and the damper hub 7 through a first torque transmission path P1 including the plurality of first inner springs SP11 acting in parallel, the first intermediate member 12, and the plurality of second inner springs SP12 acting in parallel and a second torque transmission path P2 including the plurality of first outer springs SP21 acting in parallel, the second intermediate member 14, and the plurality of second outer springs SP22 acting in parallel. The first and second inner springs SP11, SP12 and the first and second outer springs SP21, SP22 act in parallel to damp (absorb) fluctuation in torque transmitted to the drive member 11, until the input torque to the drive member 11 reaches the torque T1.

When the input torque to the drive member 11 reaches the torque T1, the first stopper 21 restricts relative rotation between the first intermediate member 12 and the driven member 16 and deflection of the second inner springs SP12, and the second stopper 22 restricts relative rotation between the second intermediate member 14 and the driven member 16 and deflection of the second outer springs SP22. Accordingly, from the time the input torque to the drive member 11 reaches the torque T1 until the input torque reaches the torque T2 and the third stopper 23 functions, the first inner springs SP11 and the second outer springs SP21 act in parallel to damp (absorb) fluctuation in torque transmitted to the drive member 11.

Next, a design procedure of the damper device 10 will be described.

As described above, in the damper device 10, the first and second inner springs SP11, SP12 and the first and second outer springs SP21, SP22 act in parallel until input torque transmitted to the drive member 11 reaches the torque T1. When the first and second inner springs SP11, SP12 and the first and second outer springs SP21, SP22 act in parallel, resonance of the first and second intermediate members 12, 14 or resonance mainly due to vibration of the entire damper device 10 and a drive shaft of the vehicle occurs in one of the first and second torque transmission paths PI, P2 according to the frequency of vibration transmitted from the engine to the drive member 11. Once resonance occurs in one of the first and second torque transmission paths PI, P2 according to the frequency of vibration transmitted to the drive member 11, vibration transmitted from the drive member 11 to the driven member 16 through the first torque transmission path P1 becomes 180 degrees out of phase with respect to vibration transmitted from the drive member 11 to the driven member 16 through the second torque transmission path P2. The damper device 10 can thus damp the vibration at the driven member 16 by using the phase shift of the vibration between the first and second torque transmission paths PI, P2.

The inventors carried out intensive research and analysis in order to further improve vibration damping capability of the damper device 10 having such characteristics, and formed an equation of motion as given by the following expression (1) for a vibration system including the damper device 10 with torque being transmitted from the engine to the drive member 11 by the lockup coupling. In the expression (1), "J1" represents the moment of inertia of the drive member 11, "J21" represents the moment of inertia of the first intermediate member 12, J22" represents the moment of inertia of the second intermediate member 14, and "J3" represents the moment of inertia of the driven member 16. "θ1" represents the torsion angle of the drive member 11, "θ21" represents the torsion angle of the first intermediate member 12, "θ22" represents the torsion angle of the second intermediate member 14, and "θ3" represents the torsion angle of the driven member 16. Moreover, "k1" represents the combined spring constant of the plurality of first inner springs SP11 that act in parallel between the drive member 11 and the first intermediate member 12, "k2" represents the combined spring constant of the plurality of second inner springs SP12 that act in parallel between the first intermediate member 12 and the driven member 16, "k3" represents the combined spring constant of the plurality of first outer springs SP21 that act in parallel between the drive member 11 and the second intermediate member 14, "k4" represents the combined spring constant of the plurality of second outer springs SP22 that act in parallel between the second intermediate member 14 and the driven member 16, and "kR" represents the stiffness, namely the spring constant, of the transmission TM, the drive shaft, etc. which are disposed between the driven member 16 and wheels of the vehicle. "T" represents the input torque that is transmitted from the engine to the drive member 11.

[Expression 1]

$$\begin{pmatrix} J_1 & 0 & 0 & 0 \\ 0 & J_{21} & 0 & 0 \\ 0 & 0 & J_{22} & 0 \\ 0 & 0 & 0 & J_3 \end{pmatrix}\begin{pmatrix} \ddot{\theta}_1 \\ \ddot{\theta}_{21} \\ \ddot{\theta}_{22} \\ \ddot{\theta}_3 \end{pmatrix} + \begin{pmatrix} k_1+k_3 & -k_1 & -k_3 & 0 \\ -k_1 & k_1+k_2 & 0 & -k_2 \\ -k_3 & 0 & k_3+k_4 & -k_4 \\ 0 & -k_2 & -k_4 & k_2+k_4+k_R \end{pmatrix}\begin{pmatrix} \theta_1 \\ \theta_{21} \\ \theta_{22} \\ \theta_3 \end{pmatrix} = \begin{pmatrix} T \\ 0 \\ 0 \\ 0 \end{pmatrix} \cdots (1)$$

The inventors also assumed that the input torque T vibrates periodically as given by the following expression (2) and that the torsion angle θ1 of the drive member 11, the torsion angle θ21 of the first intermediate member 12, the torsion angle θ22 of the second intermediate member 14, and the torsion angle θ3 of the driven member 16 respond (vibrate) periodically as given by the following expression (3). In the expressions (2) and (3), "ω" represents the angular frequency of periodic fluctuation (vibration) of the input torque T. In the expression (3), "Θ1" represents the amplitude of vibration (vibration amplitude, i.e., the maximum torsion angle) of the drive member 11 which occurs as the torque from the engine is transmitted thereto, "Θ21" represents the amplitude of vibration (vibration amplitude) of the first intermediate member 12 which occurs as the torque from the engine is transmitted to the drive member 11, and "Θ22" represents the amplitude of vibration (vibration amplitude) of the second intermediate member 14 which occurs as the torque from the engine is transmitted to the drive member 11, and "Θ3" represents the amplitude of vibration (vibration amplitude) of the driven member 16 which occurs as the torque from the engine is transmitted to the drive member 11. Under the above assumption, an identity as given by the following expression (4) can be obtained by substituting the expressions (2) and (3) for the expression (1) and eliminating "sin ωt" from both sides.

[Expression 2]

$$T = T_0 \sin \omega t \quad \cdots (2)$$

$$\begin{bmatrix} \theta_1 \\ \theta_{21} \\ \theta_{22} \\ \theta_3 \end{bmatrix} = \begin{bmatrix} \Theta_1 \\ \Theta_{21} \\ \Theta_{22} \\ \Theta_3 \end{bmatrix} \sin \omega t \quad \cdots (3)$$

$$\begin{pmatrix} -\omega^2 J_1 + k_1 + k_3 & -k_1 & -k_3 & 0 \\ -k_1 & -\omega^2 J_{21} + k_1 + k_2 & 0 & -k_2 \\ -k_3 & 0 & -\omega^2 J_{22} + k_3 + k_4 & -k_4 \\ 0 & -k_2 & -k_4 & -\omega^2 J_3 + k_2 + k_4 + k_R \end{pmatrix} \begin{pmatrix} \Theta_1 \\ \Theta_{21} \\ \Theta_{22} \\ \Theta_3 \end{pmatrix} = \begin{pmatrix} T_0 \\ 0 \\ 0 \\ 0 \end{pmatrix} \quad \cdots (4)$$

The inventors looked at the fact that when the vibration amplitude Θ3 of the driven member 16 in the expression (4) is zero, vibration from the engine is theoretically completely damped by the damper device 10 and vibration is theoretically not transmitted to the transmission, the drive shaft, etc. which are located in the stages after the driven member 16. In view of this, the inventors solved the identity as given by the expression (4) for the vibration amplitude Θ3 and obtained a conditional expression as given by the following expression (5) by setting Θ3 = 0. In the case where the relationship of the expression (5) is satisfied, vibration from the engine transmitted from the drive member 11 to the driven member 16 through the first torque transmission path P1 and vibration transmitted from the drive member 11 to the driven member 16 through the second torque transmission path P2 cancel each other, and the vibration amplitude Θ3 of the driven member 16 becomes theoretically equal to zero. It should be understood from this analysis result that, in the damper device 10 having the above configuration, an anti-resonance point A can be set at which the vibration amplitude Θ3 of the driven member 16 becomes theoretically equal to zero when vibration transmitted to the driven member 16 through the first torque transmission path P1 becomes 180 degrees out of phase with respect to vibration transmitted to the driven member 16 through the second torque transmission path P2 due to occurrence of resonance. That is, designing the damper device 10 based on the frequency fa at the anti-resonance point A can further improve the vibration damping capability of the damper device 10 that includes between the drive member 11 and the driven member 16 the first and second torque transmission paths PI, P2 each having the first or second intermediate member 12, 14.

[Expression 3]

$$\omega^2 = \frac{k_1 k_2 k_3 + k_2 k_3 k_4 + k_3 k_4 k_1 + k_4 k_1 k_2}{J_{21} k_3 k_4 + J_{22} k_1 k_2} \quad \cdots (5)$$

In the vehicle having the engine mounted thereon as a source of power for driving the vehicle, the lockup engine speed Nlup of the lockup clutch is further reduced to promptly mechanically transmit torque from the engine to the transmission, whereby power transmission efficiency between the engine and the transmission can be improved and thus fuel economy of the engine can be improved. However, in the low engine speed range of about 500 rpm to 1,500 rpm which can be the range in which the lockup engine speed Nlup is set, larger vibration is transmitted from the engine to the drive member 11 via the lockup clutch, and an increase in vibration level is significant especially in vehicles having mounted thereon an engine with a smaller number of cylinders such as a three-cylinder or four-cylinder engine. Accordingly, in order for large vibration not to be transmitted to the transmission etc. when and immediately after the lockup coupling is performed, it is necessary to further reduce the vibration level in an engine speed range near the lockup engine speed Nlup of the entire damper device 10 (the driven member 16) that transmits torque (vibration) from the engine to the transmission with the lockup coupling being performed.

In view of this, the inventors configured the damper device 10 based on the lockup engine speed Nlup determined for the lockup clutch 8 so that the above anti-resonance point A was formed when the engine speed was in the range of 500 rpm to 1,500 rpm (the range in which the lockup engine speed Nlup is expected to be set). The frequency fa at the anti-resonance point A is given by the following expression (6) by substituting "ω = 2πfa" in the above expression (5), where "fa" represents the frequency of the anti-resonance point A. The engine speed Nea corresponding to the frequency fa is given by Nea = (120/n)·fa, where "n" represents the number of cylinders of the engine. Accordingly, in the damper device 10, the combined spring constant k1 of the plurality of first inner springs SP11, the combined spring constant k2 of the plurality of second inner springs SP12, the combined spring constant k3 of the plurality of first outer springs SP21, the combined spring constant k4 of the plurality of second outer springs SP22, the moment of inertia J21 of the first intermediate member 12, and the moment of inertia J22 of the second intermediate member 14 (the moment of inertia of the turbine runner etc. coupled to the first or second intermediate member 12, 14 so as to rotate therewith is also taken into account (the sum of the moments of inertia of the first or second intermediate member 12, 14, the turbine runner, etc.)) are selected and set so as to satisfy the following expression (7). That is, in the damper device 10, the spring constants k1, k2, k3, k4 and the moments of inertia J21, J22 of the first and second intermediate members 12, 14 are determined based on the frequency fa at the anti-resonance point A (and the lockup engine speed Nlup).

[Expression 4]

$$fa = \frac{1}{2\pi} \sqrt{\frac{k_1 k_2 k_3 + k_2 k_3 k_4 + k_3 k_4 k_1 + k_4 k_1 k_2}{J_{21} k_3 k_4 + J_{22} k_1 k_2}} \quad \cdots (6)$$

$$500\,rpm \leq \frac{120}{n} fa \leq 1500\,rpm \quad \cdots (7)$$

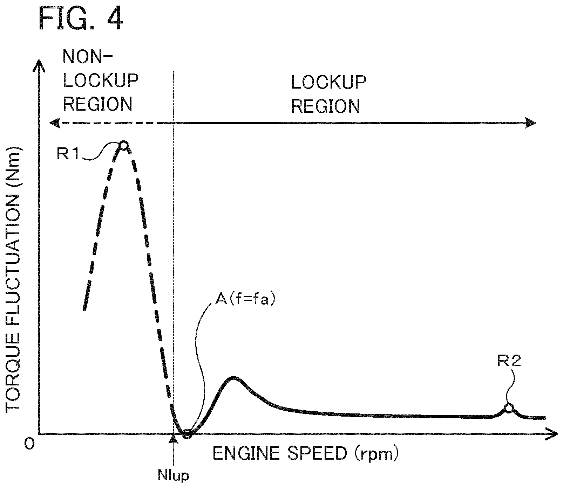

The anti-resonance point A at which the vibration amplitude Θ3 of the driven member 16 can be theoretically zero (can further be reduced) is thus set in the low engine speed range of 500 rpm to 1,500 rpm (the range in which the lockup engine speed Nlup is expected to be set), whereby the frequency at which the resonance that produces the anti-resonance point A (the resonance that just has to be caused in order to form the anti-resonance point A, see the resonance point R1 in FIG. 4) occurs can be shifted to the lower engine speed side (lower frequency side) so as to be included in a non-lockup region (see the long dashed double-short dashed line in FIG. 4) of the lockup clutch 8, as shown in FIG. 4. This allows the lockup coupling (coupling between the engine and the drive member 11) to be performed at a lower engine speed and can further improve the vibration damping capability of the damper device 10 in the low engine speed range in which vibration from the engine tends to be large.

Moreover, when the damper device 10 is configured so as to satisfy the expression (7), it is preferable to select and set the spring constants k1, k2, k3, k4 and the moments of inertia J21 and J22 so that the frequency of the resonance that produces the anti-resonance point A is lower than the frequency fa at the anti-resonance point A and is as low as possible. This can further reduce the frequency fa at the anti-resonance point and allows the lockup coupling to be performed at a much lower engine speed. In the case where the resonance that produces the anti-resonance point A is the resonance caused by vibration of the first intermediate member 12 coupled to the turbine runner 5, the frequency fR1 can be given by the following simple expression (8), where "fR1" represents the frequency of this resonance (resonance point R1) (the natural frequency of the first torque transmission path P1, namely the first intermediate member 12, at the time the torque is transmitted from the drive member 11 to the driven member 16 via the first inner springs SP11 and the second inner springs SP12). The expression (8) represents the natural frequency of the first torque transmission path P1 (the first intermediate member 12) on the assumption that the drive member 11 and the driven member 16 do not rotate relative to each other. In this case, the resonance of the first intermediate member 12 is hypothetical resonance that does not occur in the engine speed range in which the damper device 10 is used, and the engine speed corresponding to the natural frequency fR1 of the first intermediate member 12 is lower than the lockup engine speed Nlup of the lockup clutch 8.

[Expression 5]

$$f_{R1} = \frac{1}{2\pi} \sqrt{\frac{k_1 + k_2}{J_{21}}} \quad \cdots (8)$$

As shown in FIG. 4, in the damper device 10 configured as described above, the subsequent resonance (e.g., the resonance of the second intermediate member 14, see the resonance point R2 in FIG. 4) occurs when the engine speed has increased since production of the anti-resonance point A. It is therefore preferable to select and set the spring constants k1, k2, k3, k4 and the moments of inertia J21 and J22 so that resonance (resonance point R2) that occurs at a higher engine speed (higher frequency) than the anti-resonance point A has a higher frequency. This allows this resonance (resonance point R2) to be caused in the high engine speed range in which vibration is less likely to be significant, and can further improve the vibration damping capability of the damper device 10 in the low engine speed range. In the case where the resonance that occurs at a higher engine speed than the anti-resonance point A is the resonance of the second intermediate member 14, the frequency fR2 can be given by the following simple expression (9), where "fR2" represents the frequency of this resonance (the natural frequency of the second torque transmission path P2, namely the second intermediate member 14, at the time the torque is transmitted from the drive member 11 to the driven member 16 via the first outer springs SP21 and the fourth outer springs SP22). The expression (9) represents the natural frequency of the second torque transmission path P2 (the second intermediate member 14) on the assumption that the drive member 11 and the driven member 16 do not rotate relative to each other. In this case, the engine speed corresponding to the natural frequency fR2 of the second intermediate member 14 is higher than the lockup engine speed Nlup.

[Expression 6]

$$f_{R2} = \frac{1}{2\pi}\sqrt{\frac{k_3 + k_4}{J_{22}}} \quad \cdots (9)$$

Moreover, in the damper device 10 configured as described above, in order to further improve the vibration damping capability at around the lockup engine speed Nlup, it is necessary to separate the lockup engine speed Nlup from the engine speed corresponding to the resonance point R2 as much as possible. Accordingly, when configuring the damper device 10 so as to satisfy the expression (7), it is preferable to select and set the spring constants k1, k2, k3, k4 and the moments of inertia J21 and J22 so as to satisfy Nlup ≤ (120/n)·fa (= Nea). This allows the lockup coupling to be performed by the lockup clutch 8 while satisfactorily restraining transmission of vibration to the input shaft IS of the transmission, and allows vibration from the engine to be very satisfactorily damped by the damper device 10 immediately after the lockup coupling is performed.

In the above damper device 10, the average mounting radius ro of the first and second outer springs SP21, SP22 corresponding to the second intermediate member 14 having a higher natural frequency than the first intermediate member 12 is made larger than the average mounting radius ri of the first and second inner springs SP11, SP12 corresponding to the first intermediate member 12. That is, the axes of the first and second outer springs SP21, SP22 having a larger spring constant (stiffness) than the first and second inner springs SP11, SP12 are located outside the axes of the first and second inner springs SP11, SP12 in the radial direction of the damper device 10. Moreover, in the damper device 10, the first and second outer springs SP21, SP22 are disposed such that the entire first and second outer springs SP21, SP22 are located radially outside the first and second inner springs SP11, SP12.

This can further increase the torsion angle (stroke) of the first and second outer springs SP21, SP22 having high stiffness and can thus achieve reduction in stiffness of the first and second outer springs SP21, SP22 while allowing large torque to be transmitted to the drive member 11. As a result, equivalent stiffness keq = (1/k1 + 1/k2) - 1 + (1/k3 + 1/k4) - 1 of the damper device 10 can further be reduced, and the frequency at which the resonance of the entire vibration system including the damper device 10, namely the resonance due to vibration of the entire damper device 10 and the drive shaft of the vehicle (the resonance due to vibration produced between the drive member and the drive shaft), occurs can be shifted to the lower engine speed side (lower frequency side). Accordingly, in the damper device 10, the frequency of the anti-resonance point A is made closer to that of the resonance of the entire vibration system, whereby the vibration damping capability can be very satisfactorily improved.

In the damper device 10, the annular member 121 of the first intermediate member 12, the second intermediate member 14, and the driven member 16 are disposed between the first and second plate members 111, 112 of the drive member 11 in the axial direction. In the damper device 10 with this configuration, the friction force that is generated between the first and second plate members 111, 112 and each spring SP11, SP12, SP21, SP22 especially due to the centrifugal force can be reduced by appropriately designing the shapes of the spring contact portions 121c, 14c of the first and second intermediate members 12, 14 and the inner and outer spring contact portions 16ci, 16co of the driven member 16. As a result, hysteresis of the entire damper device 10 can be satisfactorily reduced.

Moreover, in the damper device 10, the first intermediate member 12 (either only the annular member 121 or both the annular member 121 and the coupling member 122) is configured so that its moment of inertia J21 is larger than the moment of inertia J22 of the second intermediate member 14, and is coupled to the turbine runner 5 so as to rotate therewith. This can further reduce the natural frequency (fR1) on the lower frequency side and can further reduce the vibration level near the anti-resonance point A. Coupling the first intermediate member 12 to the turbine runner 5 so that the first intermediate member 12 rotates with the turbine runner 5 can further increase the substantial moment of inertia J21 of the first intermediate member 12 (the sum of the moments of inertia of the first intermediate member 12, the turbine runner 5, etc.). This can further reduce the natural frequency (fR1) on the lower frequency side, whereby the resonance point of the first intermediate member 12 can be set to a frequency on the lower engine speed side (lower frequency side).

In the damper device 10, the inner and outer spring contact portions 111ci, 112ci, 111co, 112co of the drive member 11, the spring contact portions 121c, 14c of the first and second intermediate members 12, 14, and the inner and outer spring contact portions 16ci, 16co of the driven member 16 extend in the radial direction of the damper device 10 (see FIG. 2). Each spring contact portion 111ci, 112ci, 111co, 112co, 121c, 14c, 16ci, 16co can thus press a corresponding spring SP11, SP12, SP21, or SP22 so that the spring SP11, SP12, SP21, or SP22 is properly extended and contracted along its axis. As a result, the vibration damping capability of the damper device 10 can further be improved.

Moreover, the damper device 10 includes the coupling member 122 fixed to the turbine runner 5 and having the spring contact portions 122c each located between adjacent two of the first and second inner springs SP11, SP12 and contacting the ends in the circumferential direction of these two first and second inner springs SP11, SP12. This allows the first intermediate member 12 to be coupled to both the first and second inner springs SP11, SP12 disposed on the radially inner side and also allows the first intermediate member 12 to be coupled to the turbine runner 5 while restraining an increase in axial length of the damper device 10. Since both the spring contact portions 121c of the annular member 121 and the spring contact portions 122c of the coupling member 122 contact the ends of the first and second outer springs SP21, SP22, the first and second outer springs SP21, SP22 can be smoothly extended and contracted. Moreover, in the damper device 10, the spring contact portions 121c of the first intermediate member 12 (annular member 121) overlap the inner spring contact portions 16ci of the driven member 16 in the axial direction as viewed in the radial direction (see FIG. 2). Further reduction in axial length of the damper device 10 can thus be achieved.

In the damper device 10, the spring constant k21 of the first outer springs SP21 is larger than the spring constant k22 of the second outer springs SP22 (k22 < k21). However, the present disclosure is not limited to this. That is, in order to facilitate design of the damper device 10, the specifications such as the spring constant k21, the coil diameter, and the axial length of the first outer springs SP21 may be the same as the specifications such as the spring constant k22, the coil diameter, and the axial length of the second outer springs SP22 (k22 = k21). In addition to the first and second torque transmission paths P1, P2, the damper device 10 may further include at least one torque transmission path that is provided, for example, in parallel with the first and second torque transmission paths P1, P2. At least one additional set of an intermediate member and springs (elastic bodies) may be provided in, e.g., at least one of the first and second torque transmission paths P1, P2 of the damper device 10.

Moreover, in the case where slip control, namely a process of controlling an actual slip speed (actual rotational speed difference) between the engine EG and the input shaft of the transmission TM (drive member 11) to a target slip speed, is performed in the starting device 1, the frequency fa at the anti-resonance point A may be matched with the frequency fs of shudder that is generated during slip control or may be set to a value close to the frequency fs of the shudder. This can further reduce the shudder that is generated during slip control. The frequency fs of the shudder can be given by $fs = 1/2\pi \cdot \sqrt{(keq/Jpd)}$ by using the moment of inertia Jpd and the equivalent stiffness keq of the damper device 10, where "Jpd" represents the moment of inertia of the lockup piston 80 and the drive member 11 which rotate together.

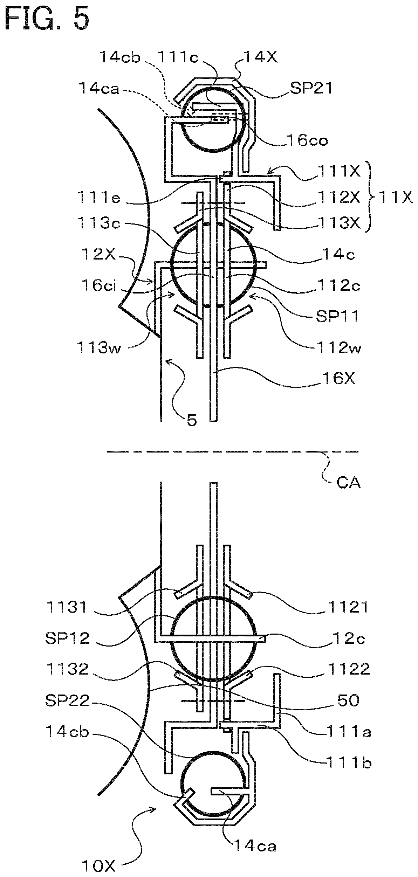

FIG. 5 is a sectional view showing another damper device 10X of the present disclosure. Of the components of the damper device 10X, the same components as those of the above damper device 10 are denoted with the same reference characters and repetitive description will be omitted.

A drive member 11X of the damper device 10X shown in FIG. 5 includes an annular first plate member (first input member) 111X fixed to a lockup piston of a lockup clutch, an annular second plate member (second input member) 112X rotatably supported (aligned) by, e.g., a damper hub and coupled so as to rotate with the first plate member 111X, and an annular third plate member (third input member) 113X disposed closer to a turbine runner 5 than the second plate member 112X is and coupled (fixed) to the second plate member 112X via a plurality of rivets. The drive member 11X, namely the first, second, and third plate members 111X, 112X, 113X, thus rotate with the lockup piston, and a front cover (engine) and the drive member 11X of the damper device 10X are coupled by engagement of the lockup clutch. In the case where the lockup clutch is a multi-plate hydraulic clutch, the first plate member 111X may be formed as a clutch drum of the lockup clutch.

As shown in FIG. 5, the first plate member 111X has: an annular fixed portion 111a fixed to the lockup piston; a cylindrical portion 111b extended in the axial direction from an outer peripheral portion of the fixed portion 111a; a plurality of (e.g., four) spring contact portions (outer contact portions) 111c extended radially outward from a free end of the cylindrical portion 111b at intervals (regular intervals) in the circumferential direction and extending in the axial direction away from the fixed portion 111a; and a plurality of engagement protrusions 111e extended in the axial direction from the free end of the cylindrical portion 111b at intervals in the circumferential direction.

The second plate member 112X is a plate-like annular member and has: a plurality of (e.g., three) spring accommodating windows 112w formed at intervals (regular intervals) in the circumferential direction and each in the shape of a circular arc; a plurality of (e.g., three) spring support portions 1121 formed at intervals (regular intervals) in the circumferential direction and each extending along the inner peripheral edge of a corresponding one of the spring accommodating windows 112w; a plurality of (e.g., three) spring support portions 1122 formed at intervals (regular intervals) in the circumferential direction and each extending along the outer peripheral edge of a corresponding one of the spring accommodating windows 112w such that each spring support portion 1122 faces a corresponding one of the spring support portions 1121 in the radial direction of the second plate member 112X; and a plurality of (e.g., three) spring contact portions (inner contact portions) 112c. The plurality of spring contact portions 112c are formed such that one spring contact portion 112c is located between two spring accommodating windows 112w (spring support portions 1121, 1122) which are adjacent to each other in the circumferential direction. Moreover, a plurality of engagement recesses are formed at intervals in the circumferential direction in an outer peripheral portion of the second plate member 112X, and a corresponding one of the engagement protrusions 111e of the first plate member 111X is fitted in each engagement recess with play in the radial direction. Fitting the engagement protrusions 111e in the engagement recesses allows the first and second plate members 111X, 112X to move relative to each other in the radial direction.

The third plate member 113X is also a plate-like annular member. The third plate member 113X has: a plurality of (e.g., three) spring accommodating windows 113w formed at intervals (regular intervals) in the circumferential direction and each in the shape of a circular arc; a plurality of (e.g., three) spring support portions 1131 formed at intervals (regular intervals) in the circumferential direction and each extending along the inner peripheral edge of a corresponding one of the spring accommodating windows 113w; a plurality of (e.g., three) spring support portions 1132 formed at intervals (regular intervals) in the circumferential direction and each extending along the outer peripheral edge of a corresponding one of the spring accommodating windows such that each spring support portion 1132 faces a corresponding one of the spring support portions 1131 in the radial direction of the third plate member 113X; and a plurality of (e.g., three) spring contact portions (third contact portions) 113c. The plurality of spring contact portions 113c are formed such that one spring contact portion 113c is located between two spring support portions 1131, 1132 (spring accommodating windows) which are adjacent to each other in the circumferential direction.

A first intermediate member 12X of the damper device 10X is an annular member fixed to a turbine hub via, e.g., a plurality of rivets and coupled to the turbine runner 5 so as to rotate therewith. The first intermediate member 12X has a plurality of (e.g., three) spring contact portions 12c extended in the axial direction from its inner peripheral portion at intervals (regular intervals) in the circumferential direction. A second intermediate member 14X of the damper device 10X is formed in an annular shape so as to support (guide) the outer peripheral portions of the first and second outer springs SP21, SP22, the sides of the first and second outer springs SP21, SP22 near the lockup piston (near the engine EG) (the right sides in FIG. 5), and the portions of the first and second outer springs SP21, SP22 which are radially outside the sides of the first and second outer springs SP21, SP22 near the turbine runner 5 (near transmission TM). The second intermediate member 14X is rotatably supported (aligned) by the cylindrical portion 111b of the first plate member 111X of the drive member 11X and is disposed in the outer peripheral region of the hydraulic transmission chamber 9. The second intermediate member 14X has a higher natural frequency than the first intermediate member 12X and a smaller moment of inertia than the first intermediate member 12X.

The second intermediate member 14X has a plurality of (e.g., two at 180° intervals) spring contact portions 14ca formed at intervals in the circumferential direction and a plurality of (e.g., two at 180° intervals) spring contact portions 14cb formed at intervals in the circumferential direction. As shown in FIG. 5, each spring contact portion 14ca is extended in the axial direction from the side of the second intermediate member 14X on the lockup piston side (the right side in FIG. 5) toward the turbine runner 5, and each spring contact portion 14cb is extended obliquely inward from the peripheral edge of the second intermediate member 14X on the turbine runner 5 side so as to face a corresponding one of the spring contact portions 14ca in the axial direction.

A driven member 16X of the damper device 10X is a plate-like annular member, and as shown in FIG. 5, is disposed between the second plate member 112X and the third plate member 113X of the drive member 11X in the axial direction and is fixed to the damper hub via rivets. The driven member 16 has: a plurality of (e.g., three) spring accommodating windows formed at intervals (regular intervals) in the circumferential direction and each in the shape of a circular arc; a plurality of (e.g., three) inner spring contact portions (inner contact portions) 16ci formed at intervals (regular intervals) in the circumferential direction near the inner peripheral edge of the driven member 16; and a plurality of (e.g., three) outer spring contact portions (outer contact portions) 16co formed radially outside the plurality of inner spring contact portions 16ci at intervals in the circumferential direction and extending in the axial direction from the turbine runner 5 side toward the lockup piston 80 side. The plurality of inner spring contact portions 16ci are formed such that one inner spring contact portion 16ci is located between two spring accommodating windows which are adjacent to each other in the circumferential direction.

The first and second inner springs SP11, SP12 are supported by corresponding spring support portions 1121, 1122, 1131, 1132 of the drive member 11X, namely the second and third plate members 112X, 113X, such that the first and second inner springs SP11, SP12 are paired (each pair acts in series) and are alternately arranged in the circumferential direction (the circumferential direction of the annular member 121). Moreover, in the damper device 10X mounted in position, each spring contact portion 112c of the second plate member 112X is located between the first and second inner springs SP11, SP12 that are disposed in different spring accommodating windows 112w from each other and are not paired (do not act in series), and contacts the ends of these two first and second inner springs SP11, SP12 in the circumferential direction. Similarly, in the damper device 10X mounted in position, each spring contact portion 113c of the third plate member 113X is also located between the first and second inner springs SP11, SP12 that are disposed in different inner spring accommodating windows 113w from each other (that are not paired), and contacts the ends of these two first and second inner springs SP11, SP12 in the circumferential direction.

Each spring contact portion 12c of the first intermediate member 12X is inserted from the turbine runner 5 side into a corresponding one of the spring accommodating windows 113w of the third plate member 113X, is located between the first and second inner springs SP11, SP12 that are paired (act in series), and contacts the ends of this pair of first and second inner springs SP11, SP12 in the circumferential direction. Moreover, in the damper device 10X mounted in position, like the spring contact portions 112c, 113c of the drive member 11X, each inner spring contact portion 16ci of the driven member 16X is located between the first and second inner springs SP11, SP12 that are not paired (do not act in series), and contacts the ends of these two first and second inner springs SP11, SP12 in the circumferential direction.

On the other hand, the first and second outer springs SP21, SP22 are supported by the second intermediate member 14X such that the first and second outer springs SP21, SP22 are paired (each pair acts in series) and are alternately arranged in the circumferential direction of the second intermediate member 14X. In the damper device 10X mounted in position, each spring contact portion 111c of the first plate member 111X of the drive member 11X is located between the first and second outer springs SP21, SP22 that are not paired (do not act in series), and contacts the ends of these two first and second outer springs SP21, SP22 in the circumferential direction. Moreover, each spring contact portion 14ca, 14cb of the second intermediate member 14X is located between the first and second outer springs SP21, SP22 that are paired (act in series), and contacts the ends of this pair of first and second outer springs SP21, SP22 in the circumferential direction. Like the spring contact portions 111c of the drive member 11X, each outer spring contact portion 16co of the driven member 16X is located between the first and second outer springs SP21, SP22 that are not paired (do not act in series), and contacts the ends of these two first and second outer springs SP21, SP22 in the circumferential direction.

In the damper device 10X configured as described above as well, the average mounting radius ro of the first and second outer springs SP21, SP22 corresponding to the second intermediate member 14X having a higher natural frequency than the first intermediate member 12X is larger than the average mounting radius ri of the first and second inner springs SP11, SP12 corresponding to the first intermediate member 12. That is, the axes of the first and second outer springs SP21, SP22 are located outside the axes of the first and second inner springs SP11, SP12 in the radial direction of the damper device 10X. Moreover, in the damper device 10X as well, the first and second outer springs SP21, SP22 are disposed such that the entire first and second outer springs SP21, SP22 are located radially outside the first and second inner springs SP11, SP12. This can further increase the torsion angle (stroke) of the first and second outer springs SP21, SP22 having high stiffness and can thus achieve reduction in stiffness of the first and second outer springs SP21, SP22 while allowing large torque to be transmitted to the drive member 11X. As a result, equivalent stiffness keq of the damper device 10X can further be reduced, and the frequency at which the resonance of the entire vibration system including the damper device 10X occurs can be shifted to the lower engine speed side (lower frequency side). Accordingly, in the damper device 10X as well, the frequency of the anti-resonance point A is made closer to that of the resonance of the entire vibration system, whereby the vibration damping capability can be very satisfactorily improved.

Since the second intermediate member 14X supports the first and second outer springs SP21, SP22, the relative speed between the second intermediate member 14X and the first and second outer springs SP21, SP22 that are deflected according to the torsion angle of the second intermediate member 14X with respect to the drive member 11X and the driven member 16X can be reduced. This can reduce the friction force that is generated between the second intermediate member 14X and the first and second outer springs SP21, SP22 and can thus reduce hysteresis of the entire damper device 10X. Moreover, the first intermediate member 12X of the damper device 10X has the plurality of spring contact portions 12c fixed to the turbine runner 5 and extending in the axial direction such that each spring contact portion 12c is located between adjacent two of the first and second inner springs SP11, SP12 and contacts the ends of these two first and second inner springs SP11, SP12 in the circumferential direction. This allows the first intermediate member 12X to be coupled to both the first and second inner springs SP11, SP12 disposed on the radially inner side and also allows the first intermediate member 12X to be coupled to the turbine runner 5 while restraining an increase in axial length of the damper device 10X.

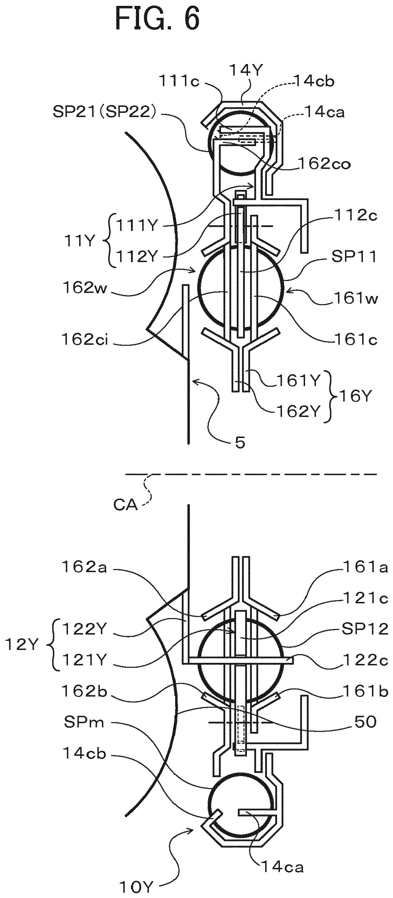

FIG. 6 is a sectional view showing still another damper device 10Y of the present disclosure. Of the components of the damper device 10Y, the same components as those of the above damper devices 10, 10X are denoted with the same reference characters and repetitive description will be omitted.

A drive member 11Y of the damper device 10Y shown in FIG. 6 includes a first plate member 111Y (first input member) having a structure similar to that of the first plate member 111X described above, and an annular second plate member (second input member) 112Y coupled to the first plate member 111Y so as to rotate therewith. The first plate member 111Y has spring contact portions (outer contact portions) 111c contacting the ends of the first outer springs SP21 in the circumferential direction. The second plate member 112Y has a plurality of (e.g., three) spring accommodating windows and a plurality of (e.g., three) spring contact portions 112c. The plurality of spring contact portions 112c are formed such that one spring contact portion 112c is located between two spring accommodating windows which are adjacent to each other in the circumferential direction. The first and second plate members 111Y, 112Y are coupled to each other via fitting portions that are configured in a manner similar to that of the first plate member 111X and the second plate member 112X described above.

A first intermediate member 12Y of the damper device 10Y includes an annular member 121Y and a coupling member 122Y which are configured similarly to those of the first intermediate member 12 of the damper device 10. A second intermediate member 14Y of the damper device 10Y is configured similarly to the first intermediate member 12X of the damper device 10X. The second intermediate member 14Y is rotatably supported (aligned) by the first plate member 111Y of the drive member 11Y and supports the plurality of first and second outer springs SP21, SP22 such that the first and second outer springs SP21, SP22 are alternately arranged in the circumferential direction. The second intermediate member 14Y also has a higher natural frequency than the first intermediate member 12Y and a smaller moment of inertia than the first intermediate member 12Y.

A driven member 16Y of the damper device 10Y includes a first output plate (first output member) 161Y and an annular second output plate (second output member) 162Y disposed closer to a turbine runner 5 than the first output plate 161Y is and coupled (fixed) to the first output plate 161Y via a plurality of rivets. The first output plate 161Y is a plate-like annular member and has a plurality of (e.g., three) spring accommodating windows 161w formed at intervals (regular intervals) in the circumferential direction, a plurality of (e.g., three) spring support portions 161a each extending along the inner peripheral edge of a corresponding one of the spring accommodating windows 161w, a plurality of (e.g., three) spring support portions 161b each extending along the outer peripheral edge of a corresponding one of the spring accommodating windows 161w, and a plurality of (e.g., three) spring contact portions 161c. The plurality of spring contact portions 161c are formed such that one spring contact portion 161c is located between two spring accommodating windows 161w (spring support portions 161a, 161b) which are adjacent to each other in the circumferential direction.

The second output plate 162Y of the driven member 16Y is a plate-like annular member and has a plurality of (e.g., three) spring accommodating windows 162w formed at intervals (regular intervals) in the circumferential direction, a plurality of (e.g., three) spring support portions 162a each extending along the inner peripheral edge of a corresponding one of the spring accommodating windows 162w, a plurality of (e.g., three) spring support portions 162b each extending along the outer peripheral edge of a corresponding one of the spring accommodating windows 162w, a plurality of (e.g., three) inner spring contact portions 162ci, and a plurality of (e.g., four) outer spring contact portions 162co. The plurality of outer spring contact portions 162co are formed radially outside the plurality of inner spring contact portions 162ci at intervals in the circumferential direction.

The first and second inner springs SP11, SP12 are supported by corresponding spring support portions 161a, 161b, 162a, 162b of the driven member 16Y, namely the first and second output plates 161Y, 162Y, such that the first and second inner springs SP11, SP12 are paired (each pair acts in series) and are alternately arranged in the circumferential direction (the circumferential direction of the annular member 121). In the damper device 10Y mounted in position, each spring contact portion 112c of the second plate member 112Y of the drive member 11Y is located between the first and second inner springs SP11, SP12 that are not paired (do not act in series), and contacts the ends of these two first and second inner springs SP11, SP12 in the circumferential direction. Moreover, each spring contact portion 121c, 122c of the first intermediate member 12Y is located between the first and second inner springs SP11, SP12 that are paired (act in series), and contacts the ends of this pair of first and second inner springs SP11, SP12 in the circumferential direction. In the damper device 10 mounted in position, like the spring contact portions 112c of the drive member 11Y, each spring contact portion 161c and each inner spring contact portion 162ci of the driven member 16Y are located between the first and second inner springs SP11, SP12 that are not paired (do not act in series), and contacts the ends of these two first and second inner springs SP11, SP12 in the circumferential direction.

On the other hand, the first and second outer springs SP21, SP22 are supported by the second intermediate member 14Y such that the first and second outer springs SP21, SP22 are paired (each pair acts in series) and are alternately arranged in the circumferential direction of the second intermediate member 14Y. In the damper device 10 mounted in position, each spring contact portion 111c of the first plate member 111Y of the drive member 11Y is located between the first and second outer springs SP21, SP22 that are not paired (do not act in series), and contacts the ends of these two first and second outer springs SP21, SP22 in the circumferential direction. Moreover, each spring contact portion 14ca, 14cb of the second intermediate member 14Y is located between the first and second outer springs SP21, SP22 that are paired (act in series), and contacts the ends of this pair of first and second outer springs SP21, SP22 in the circumferential direction. Like the spring contact portions 111c of the drive member 11Y, each outer spring contact portion 162co of the driven member 16Y is located between the first and second outer springs SP21, SP22 that are not paired (do not act in series), and contacts the ends of these two first and second outer springs SP21, SP22 in the circumferential direction.

In the damper device 10Y configured as described above as well, the average mounting radius ro of the first and second outer springs SP21, SP22 corresponding to the second intermediate member 14Y having a higher natural frequency than the first intermediate member 12Y is larger than the average mounting radius ri of the first and second inner springs SP11, SP12 corresponding to the first intermediate member 12. That is, the axes of the first and second outer springs SP21, SP22 are located outside the axes of the first and second inner springs SP11, SP12 in the radial direction of the damper device 10Y. Moreover, in the damper device 10Y as well, the first and second outer springs SP21, SP22 are disposed such that the entire first and second outer springs SP21, SP22 are located radially outside the first and second inner springs SP11, SP12. This can further increase the torsion angle (stroke) of the first and second outer springs SP21, SP22 having high stiffness and can thus achieve reduction in stiffness of the first and second outer springs SP21, SP22 while allowing large torque to be transmitted to the drive member 11Y. As a result, equivalent stiffness keq of the damper device 10Y can further be reduced, and the frequency at which the resonance of the entire vibration system including the damper device 10Y occurs can be shifted to the lower engine speed side (lower frequency side). Accordingly, in the damper device 10Y as well, the frequency of the anti-resonance point A is made closer to that of the resonance of the entire vibration system, whereby the vibration damping capability can be very satisfactorily improved.

Since the first and second outer springs SP21, SP22 are supported by the second intermediate member 14Y, the relative speed between the second intermediate member 14Y and the first and second outer springs SP21, SP22 that are deflected according to the torsion angle of the second intermediate member 14Y with respect to the drive member 11Y and the driven member 16Y can be reduced. This can reduce the friction force that is generated between the second intermediate member 14Y and the first and second outer springs SP21, SP22 and can thus reduce hysteresis of the entire damper device 10Y. Moreover, the first intermediate member 12Y of the damper device 10Y includes the coupling member 122Y fixed to the turbine runner 5 and having the spring contact portions 122c each located between adjacent two of the first and second inner springs SP11, SP12 and contacting the ends of these two first and second inner springs SP11, SP12 in the circumferential direction. This allows the first intermediate member 12Y to be coupled to both the first and second inner springs SP11, SP12 disposed on the radially inner side and also allows the first intermediate member 12Y to be coupled to the turbine runner 5 while restraining an increase in axial length of the damper device 10Y.

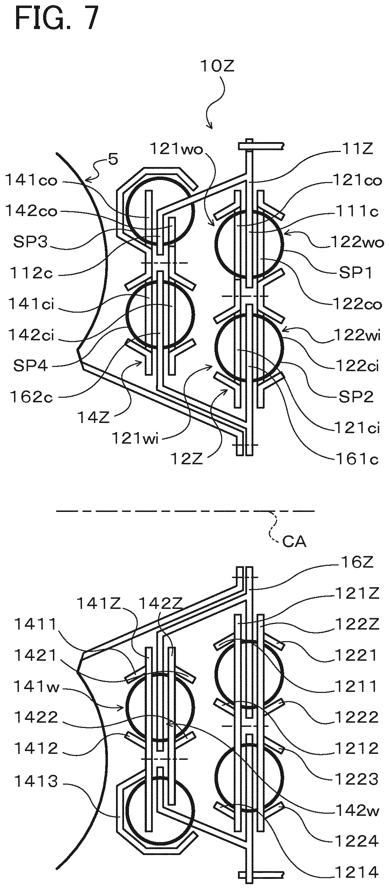

FIG. 7 is a sectional view showing yet another damper device 10Z of the present disclosure. Of the components of the damper device 10Z, the same components as those of the above damper devices 10 to 10Y are denoted with the same reference characters and repetitive description will be omitted.

The damper device 10Z shown in FIG. 7 includes a plurality of first springs (first elastic bodies) SP1 disposed between a drive member 11Z and a first intermediate member 12Z to transmit rotational torque, a plurality of second springs (second elastic bodies) SP2 disposed between the first intermediate member 12Z and a driven member 16Z to transmit rotational torque, a plurality of third springs (third elastic bodies) SP3 disposed between the drive member 11Z and a second intermediate member 14Z to transmit rotational torque, and a plurality of fourth springs (fourth elastic bodies) SP4 disposed between the second intermediate member 14Z and the driven member 16Z to transmit rotational torque.

In the damper device 10Z, k11, k12, k21, and k22 are selected to satisfy the relationship k12 < k21 = k22 < k11, where "k11" represents the stiffness, namely the spring constant, of the first springs SP1, "k12" represents the stiffness, namely the spring constant, of the second springs SP2, "k21" represents the stiffness, namely the spring constant, of the third springs SP3, and "k22" represents the stiffness, namely the spring constant, of the fourth springs SP4.

The drive member 11Z of the damper device 10Z shown in FIG. 7 is coupled to a lockup piston of a single-plate lockup clutch or a clutch drum of a multi-plate lockup clutch so as to rotate with the lockup piston or the clutch drum, and has a plurality of first spring contact portions 111c and a plurality of second spring contact portions 112c. An outer peripheral portion of the drive member 11Z engages with the lockup piston or the clutch drum. The plurality of first spring contact portions 111c are extended inward in the radial direction of the damper device 10Z from the outer peripheral portion of the drive member 11Z. Moreover, in the damper device 10Z, the plurality of second spring contact portions 112c are extended in the axial direction of the damper device 10Z from the outer peripheral portion of the drive member 11Z toward the turbine runner 5 and extended inward in the radial direction of the damper device 10Z. The first and second spring contact portions 111c and 112c are thus separated from each other in the axial direction of the damper device 10Z.

The first intermediate member 12Z of the damper device 10Z includes a first plate member 121Z disposed near the second intermediate member 14Z, and a second plate member 122Z disposed closer to a front cover, not shown, in the axial direction of the damper device 10Z than the first plate member 121Z is. The first and second plate members 121Z, 122Z are formed in an annular shape and are coupled to each other via a plurality of rivets. As shown in the figure, the first plate member 121Z has a plurality of inner spring accommodating windows 121wi, a plurality of outer spring accommodating windows 121wo, a plurality of spring support portions 1211, a plurality of spring support portions 1212, a plurality of spring support portions 1214, a plurality of inner spring contact portions 121ci, and a plurality of outer spring contact portions 121co.

The plurality of inner spring accommodating windows 121wi, each in the shape of a circular arc, are formed at intervals (regular intervals) in the circumferential direction in an inner peripheral portion of the first plate member 121Z. The plurality of spring support portions 1211, each extending along the inner peripheral edge of a corresponding one of the inner spring accommodating windows 121wi, are formed at intervals (regular intervals) in the circumferential direction. The plurality of spring support portions 1212, each extending along the outer peripheral edge of a corresponding one of the inner spring accommodating windows 121wi, are formed at intervals (regular intervals) in the circumferential direction such that each spring support portion 1212 faces a corresponding one of the spring support portions 1211 in the radial direction of the first plate member 121Z. The inner spring contact portions 121ci are formed such that one inner spring contact portion 121ci is located between two inner spring accommodating windows 121wi (spring support portions 1211, 1212) which are adjacent to each other in the circumferential direction. The plurality of outer spring accommodating windows 121wo, each in the shape of a circular arc, are formed at intervals in the circumferential direction in an outer peripheral portion of the first plate member 121Z so as to be located radially outside the inner spring accommodating windows 121wi. The plurality of spring support portions 1214, each extending along the outer peripheral edge of a corresponding one of the outer spring accommodating windows 121wo, are formed at intervals (regular intervals) in the circumferential direction. The outer spring contact portions 121co are formed such that one outer spring contact portion 121co is located between two outer spring accommodating windows 121wo (spring support portions 1214) which are adjacent to each other in the circumferential direction.

The second plate member 122Z has a plurality of inner spring accommodating windows 122wi, a plurality of outer spring accommodating windows 122wo, a plurality of spring support portions 1221, a plurality of spring support portions 1222, a plurality of spring support portions 1223, a plurality of spring support portions 1224, a plurality of inner spring contact portions 122ci, and a plurality of outer spring contact portions 122co. The plurality of inner spring accommodating windows 122wi, each in the shape of a circular arc, are formed at intervals (regular intervals) in the circumferential direction in an inner peripheral portion of the second plate member 122Z. The plurality of spring support portions 1221, each extending along the inner peripheral edge of a corresponding one of the inner spring accommodating windows 122wi, are formed at intervals (regular intervals) in the circumferential direction. The plurality of spring support portions 1222, each extending along the outer peripheral edge of a corresponding one of the inner spring accommodating windows 122wi, are formed at intervals (regular intervals) in the circumferential direction such that each spring support portion 1222 faces a corresponding one of the spring support portions 1221 in the radial direction of the second plate member 122Z. The inner spring contact portions 122ci are formed such that one inner spring contact portion 122ci is located between two inner spring accommodating windows 122wi (spring support portions 1221, 1222) which are adjacent to each other in the circumferential direction.

The plurality of outer spring accommodating windows 122wo, each in the shape of a circular arc, are formed at intervals in the circumferential direction in an outer peripheral portion of the second plate member 122Z so as to be located radially outside the inner spring accommodating windows 122wi. The plurality of spring support portions 1223, each extending along the inner peripheral edge of a corresponding one of the outer spring accommodating windows 122wo, are formed at intervals (regular intervals) in the circumferential direction. The plurality of spring support portions 1224, each extending along the outer peripheral edge of a corresponding one of the outer spring accommodating windows 122wo, are formed at intervals (regular intervals) in the circumferential direction such that each spring support portion 1224 faces a corresponding one of the spring support portions 1223 in the radial direction of the second plate member 122Z. The outer spring contact portions 122co are formed such that one outer spring contact portion 122co is located between two outer spring accommodating windows 122wo (spring support portions 1223, 1224) which are adjacent to each other in the circumferential direction.

The second intermediate member 14Z of the damper device 10Z includes a first plate member 141Z disposed near the turbine runner 5 and a second plate member 142Z disposed closer to a front cover, not shown, namely closer to the engine (the right side in the figure), than the first plate member 141Z is. The first and second plate members 141Z, 142Z are formed in an annular shape and are coupled to each other via a plurality of rivets.

The first plate member 141Z has: a plurality of spring accommodating windows 141w formed at intervals (regular intervals) in the circumferential direction and each in the shape of a circular arc; a plurality of spring support portions 1411 formed at intervals (regular intervals) in the circumferential direction and each extending along the inner peripheral edge of a corresponding one of the spring accommodating windows 141w; a plurality of spring support portions 1412 formed at intervals (regular intervals) in the circumferential direction and each extending along the outer peripheral edge of a corresponding one of the spring accommodating windows 141w such that each spring support portion 1412 faces a corresponding one of the spring support portions 1411 in the radial direction of the first plate member 141Z; a plurality of inner spring contact portions 141ci; an annular spring support portion 1413 formed radially outside the plurality of spring support portions 1412; and a plurality of outer spring contact portions 141co formed radially outside the plurality of spring support portions 1412.

The plurality of inner spring contact portions 141ci of the first plate member 141Z are formed such that one inner spring contact portion 141ci is located between two spring accommodating windows 141w (spring support portions 1411, 1412) which are adjacent to each other in the circumferential direction. The annular spring support portion 1413 is formed so as to support (guide) the outer peripheral portions of the plurality of third springs SP3, the sides of the plurality of third springs SP3 near the turbine runner 5 (near the transmission) (the left sides in FIG. 7), the portions of the plurality of third springs SP3 which are radially inside the sides of the third springs SP3 near turbine runner 5, and the portions (shoulder portions) of the plurality of third springs SP3 which are radially outside the sides of the third springs SP3 near the front cover. Moreover, the plurality of outer spring contact portions 141co are formed at intervals in the circumferential direction so as to project into the annular spring support portion 1413.

The second plate member 142Z has: a plurality of spring accommodating windows 142w formed at intervals (regular intervals) in the circumferential direction and each in the shape of a circular arc; a plurality of spring support portions 1421 formed at intervals (regular intervals) in the circumferential direction and each extending along the inner peripheral edge of a corresponding one of the spring accommodating windows 142w; a plurality of spring support portions 1422 formed at intervals (regular intervals) in the circumferential direction and each extending along the outer peripheral edge of a corresponding one of the spring accommodating windows 142w such that each spring support portion 1422 faces a corresponding one of the spring support portions 1421 in the radial direction of the second plate member 142Z; a plurality of inner spring contact portions 142ci; and a plurality of outer spring contact portions 142co formed radially outside the plurality of spring support portions 1422. The plurality of inner spring contact portions 142ci of the second plate member 142Z are formed such that one inner spring contact portion 142ci is located between two spring accommodating windows 142w (spring support portions 1421, 1422) which are adjacent to each other in the circumferential direction. The plurality of outer spring contact portions 142co are formed at intervals in the circumferential direction so as to project in the radial direction of the damper device 10Z.

An inner peripheral portion of the driven member 16Z of the damper device 10Z together with the turbine runner 5 is fixed to a damper hub, not shown, via rivets. As shown in the figure, the driven member 16Z has a plurality of first spring contact portions 161c and a plurality of second spring contact portions 162c. In the damper device 10Z, the plurality of first spring contact portions 161c are extended outward in the radial direction of the damper device 10Z from the inner peripheral portion of the driven member 16Z. The plurality of second spring contact portions 162c are extended in the axial direction of the damper device 10Z from the inner peripheral portion of the driven member 16Z toward the turbine runner 5 and extended outward in the radial direction of the damper device 10Z. The first and second spring contact portions 161c and 162c are thus also separated from each other in the axial direction of the damper device 10Z.

As shown in FIG. 7, the first and second plate members 121Z, 122Z of the first intermediate member 12Z are coupled such that each of the spring support portions 1211 to 1214 faces a corresponding one of the spring contact portions 1221 to 1224. In the damper device 10Z, the first intermediate member 12Z is disposed such that the first intermediate member 12Z is separated from the second intermediate member 14Z in the axial direction and is located closer to the front cover, not shown, than the second intermediate member 14Z is and that the radially outermost portion of the first intermediate member 12Z is located radially inside the radially outermost portion of the second intermediate member 14Z. Moreover, the spring support portions 1211, 1212 of the first plate member 121Z and the spring support portions 1221, 1222 of the second plate member 122Z each support (guide) a corresponding one of the second springs SP2. That is, the plurality of fourth springs SP4 are supported by the first and second plate members 141Z, 142Z so as to be arranged at intervals in the circumferential direction. The spring support portion 1214 of the first plate member 121Z and the spring support portions 1223, 1224 of the second plate member 122Z each support (guide) a corresponding one of the first springs SP1. That is, the plurality of first springs SP1 are supported by the first and second plate members 141Z, 142Z so as to be located radially outside the plurality of second springs SP2 and arranged at intervals in the circumferential direction. The first spring contact portions 111c of the drive member 11Z are inserted between the first and second plate members 121Z, 122Z in the axial direction from outside in the radial direction, and the first spring contact portions 161c of the driven member 16Z are inserted between the first and second plate members 121Z, 122Z in the axial direction from inside in the radial direction.

In the damper device 10Z mounted in position, each first spring contact portion 111c of the drive member 11Z is located between adjacent two of the first springs SP1 and contacts the ends of these two first springs SP1 in the circumferential direction. In the damper device 10Z mounted in position, the outer spring contact portions 121co, 122co of the first intermediate member 12Z contact those ends of the adjacent two first springs SP1 in the circumferential direction which do not contact the spring contact portion 111c of the drive member 11Z. Moreover, in the damper device 10Z mounted in position, the inner spring contact portions 121ci, 122ci of the first intermediate member 12Z are located between adjacent two of the second springs SP2 and contact the ends of these two second springs SP2 in the circumferential direction. In the damper device 10Z mounted in position, the first spring contact portions 161c of the driven member 16Z contact those ends of the adjacent two second springs SP2 in the circumferential direction which do not contact the inner spring contact portions 121ci, 122ci of the first intermediate member 12Z. The drive member 11Z and the first intermediate member 12Z are thus coupled via the plurality of first springs SP1 that act in parallel, and the first intermediate member 12Z and the driven member 16Z are coupled via the plurality of second springs SP2 that act in parallel. The drive member 11Z and the driven member 16Z are thus coupled via the plurality of first springs SP1, the first intermediate member 12Z, and the plurality of second springs SP2.

As shown in FIG. 7, the first and second plate members 141Z, 142Z of the second intermediate member 14Z are coupled such that each spring support portion 1411 faces a corresponding one of the spring support portions 1421 and each spring support portion 1412 faces a corresponding one of the spring support portions 1422. The spring support portion 1413 of the first plate member 141Z of the second intermediate member 14Z support the plurality of third springs SP3 such that the plurality of third springs SP3 are arranged at intervals in the circumferential direction. Moreover, the spring support portions 1411, 1412 of the first plate member 141Z and the spring support portions 1421, 1422 of the second plate member 142Z each support (guide) a corresponding one of the fourth springs SP4. That is, the plurality of fourth springs SP4 are supported by the first and second plate members 141Z, 142Z so as to be located radially inside the plurality of third springs SP3 and arranged at intervals in the circumferential direction. Moreover, the second spring contact portions 112c of the drive member 11Z are inserted between the first and second plate members 141Z, 142Z in the axial direction from outside in the radial direction, and the second spring contact portions 162c of the driven member 16Z are inserted between the first and second plate members 141Z, 142Z in the axial direction from inside in the radial direction.

In the damper device 10Z mounted in position, each second spring contact portion 112c of the drive member 11Z is located between adjacent two of the third springs SP3 and contacts the ends of these two third springs SP3 in the circumferential direction. In the damper device 10Z mounted in position, the outer spring contact portions 141co, 142co of the second intermediate member 14Z contact those ends of the adjacent two third springs SP3 in the circumferential direction which do not contact the spring contact portion 112c of the drive member 11Z. Moreover, in the damper device 10Z mounted in position, the inner spring contact portions 141ci, 142ci of the second intermediate member 14Z are located between adjacent two of the fourth springs SP4 and contact the ends of these two fourth springs SP4 in the circumferential direction. In the damper device 10Z mounted in position, the second spring contact portions 162c of the driven member 16Z contact those ends of the adjacent two fourth springs SP4 in the circumferential direction which do not contact the inner spring contact portions 141ci, 142ci of the second intermediate member 14Z. The drive member 11Z and the second intermediate member 14Z are thus coupled via the plurality of third springs SP3 that act in parallel, and the second intermediate member 14Z and the driven member 16Z are coupled via the plurality of fourth springs SP4 that act in parallel. The drive member 11Z and the driven member 16Z are thus coupled via the plurality of third springs SP3, the second intermediate member 14Z, and the plurality of fourth springs SP4.

In the above damper device 10Z, the mounting radius rSP3 of the third springs SP3 is made larger than the mounting radii rSP1, rSP2, rSP4 of the first, second, and fourth springs SP1, SP2, SP4. The mounting radius rSP1 of the first springs SP1 is made larger than the mounting radii rSP2, rSP4 of the second and fourth springs SP2, SP4. Moreover, the mounting radius rSP4 of the fourth springs SP4 is made larger than the mounting radius rSP2 of the second springs SP2. In the damper device 10Z as well, the natural frequency (fR2) of the second intermediate member 14Z is higher than that (fR1) of the first intermediate member 12Z, and the average mounting radius ro of the third and fourth springs SP3, SP4 corresponding to the second intermediate member 14Z having a higher natural frequency than the first intermediate member 12Z is larger than the average mounting radius ri of the first and second springs SP1, SP2 corresponding to the first intermediate member 12. That is, the axes of the third springs SP3 having the largest spring constant (stiffness) among the first to fourth springs SP1 to SP4 are located outside the axes of the first and second springs SP1, SP2 (and the fourth springs SP4) in the radial direction of the damper device 10Z. In the damper device 10Z, the third springs SP3 are disposed radially outside the first and second springs SP1, SP2 (and the fourth springs SP4) so as to partially overlap the first springs SP1 in the radial direction as viewed in the axial direction.

This can further increase the torsion angle (stroke) of the third springs SP3 having high stiffness and can thus achieve reduction in stiffness of the third springs SP3 while allowing large torque to be transmitted to the drive member 11Z. As a result, equivalent stiffness keq of the damper device 10Z can further be reduced, and the frequency at which the resonance of the entire vibration system including the damper device 10Z occurs can be shifted to the lower engine speed side (lower frequency side). Accordingly, in the damper device 10Z as well, the frequency of the anti-resonance point A is made closer to that of the resonance of the entire vibration system, whereby the vibration damping capability can be very satisfactorily improved. Since the second intermediate member 14Z supports the third springs SP3, the relative speed between the second intermediate member 14Z and the third springs SP3 that are deflected according to the torsion angle of the second intermediate member 14Z with respect to the drive member 11Z and the driven member 16Z can be reduced. This can reduce the friction force that is generated between the second intermediate member 14Z and the third springs SP3 and can thus reduce hysteresis of the entire damper device 10Z.

Moreover, the third springs SP3 are disposed outside the fourth springs SP4 in the radial direction of the damper device 10Z, the first and second springs SP1, SP2 are disposed so as to be separated from the third and fourth springs SP3, SP4 in the axial direction of the damper device 10Z, and the first springs SP1 are disposed outside the second springs SP2 in the radial direction. This can improve flexibility in setting the spring constants (stiffnesses), numbers, torsion angles (strokes), etc. of the first to fourth springs SP1 to SP4. In the damper device 10Z, the axes of the third springs SP3 and the axes of the fourth springs SP4 are included in a first plane perpendicular to the central axis CA. Moreover, the axes of the first springs SP1 and the axes of the second springs SP2 are included in a second plane perpendicular to the central axis CA and separated from the first plane in the axial direction of the damper device 10Z. This can restrain an increase in axial length of the damper device 10Z. The axes of the third and fourth springs SP3, SP4 may not be included in the first plane perpendicular to the central axis CA, and the axes of the first and second springs SP1, SP2 may not be included in the second plane perpendicular to the central axis CA.

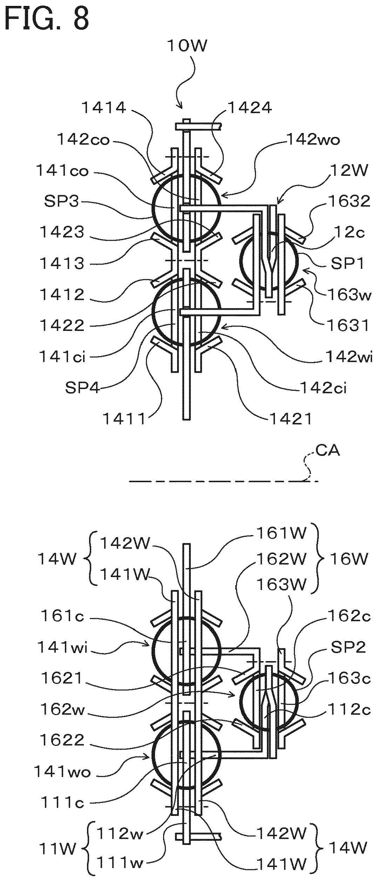

FIG. 8 is a sectional view showing a further damper device 10W of the present disclosure. Of the components of the damper device 10W, the same components as those of the above damper devices 10 to 10Z are denoted with the same reference characters and repetitive description will be omitted.

A drive member 11W of the damper device 10W shown in FIG. 8 is coupled to a lockup piston of a single-plate lockup clutch or a clutch drum of a multi-plate lockup clutch so as to rotate with the lockup piston or the clutch drum, and includes an annular first plate member 111W and an annular second plate member 112W. The first plate member 111W has a plurality of spring contact portions 111c formed at intervals in the circumferential direction so as to extend in the radial direction of the damper device 10W, and an outer peripheral portion of the first plate member 111W engages with the lockup piston or the clutch drum. The second plate member 112W has a plurality of spring contact portions 112c formed at intervals in the circumferential direction so as to extend in the radial direction of the damper device 10W and is coupled to the first plate member 111W so as to rotate therewith. With the first and second plate members 111W, 112W being coupled together, the plurality of spring contact portions 111c and the plurality of spring contact portions 112c are separated from each other in the axial and radial directions of the damper device 10W.

A first intermediate member 12W of the damper device 10W has a plurality of spring contact portions 12c. The plurality of spring contact portions 12c are formed at intervals in the circumferential direction so as to project radially inward from an inner peripheral portion of the first intermediate member 12W. A second intermediate member 14W of the damper device 10W includes a first plate member 141W disposed near a turbine runner, not shown, and a second plate member 142W disposed closer to a front cover, not shown, namely closer to an engine (on the right side in the figure), than the first plate member 141W is. The first and second plate members 141W, 142W are formed in an annular shape and are coupled to each other via a plurality of rivets.

The first plate member 141W has a plurality of inner spring accommodating windows 141wi, a plurality of outer spring accommodating windows 141wo, a plurality of spring support portions 1411, a plurality of spring support portions 1412, a plurality of spring support portions 1413, a plurality of spring support portions 1414, a plurality of inner spring contact portions 141ci, and a plurality of outer spring contact portions 141co. The plurality of inner spring accommodating windows 141wi, each in the shape of a circular arc, are formed at intervals (regular intervals) in the circumferential direction in an inner peripheral portion of the first plate member 141W. The plurality of spring support portions 1411, each extending along the inner peripheral edge of a corresponding one of the inner spring accommodating windows 141wi, are formed at intervals (regular intervals) in the circumferential direction. The plurality of spring support portions 1412, each extending along the outer peripheral edge of a corresponding one of the inner spring accommodating windows 141wi, are formed at intervals (regular intervals) in the circumferential direction such that each spring support portion 1412 faces a corresponding one of the spring support portions 1411 in the radial direction of the first plate member 141W. The inner spring contact portions 141ci are formed such that one inner spring contact portion 141ci is located between two inner spring accommodating windows 141wi (spring support portions 1411, 1412) which are adjacent to each other in the circumferential direction.

The plurality of outer spring accommodating windows 141wo, each in the shape of a circular arc, are formed at intervals in the circumferential direction in an outer peripheral portion of the first plate member 141W so as to be located radially outside the inner spring accommodating windows 141wi. The plurality of spring support portions 1413, each extending along the inner peripheral edge of a corresponding one of the outer spring accommodating windows 141wo, are formed at intervals (regular intervals) in the circumferential direction. The plurality of spring support portions 1414, each extending along the outer peripheral edge of a corresponding one of the outer spring accommodating windows 141wo, are formed at intervals (regular intervals) in the circumferential direction such that each spring support portion 1414 faces a corresponding one of the spring support portions 1413 in the radial direction of the first plate member 141W. Moreover, the outer spring contact portions 141co are formed such that one outer spring contact portion 141co is located between two outer spring accommodating windows 141wo (spring support portions 1413, 1414) which are adjacent to each other in the circumferential direction.

The second plate member 142W has a plurality of inner spring accommodating windows 142wi, a plurality of outer spring accommodating windows 142wo, a plurality of spring support portions 1421, a plurality of spring support portions 1422, a plurality of spring support portions 1423, a plurality of spring support portions 1424, a plurality of inner spring contact portions 142ci, and a plurality of outer spring contact portions 142co. The plurality of inner spring accommodating windows 142wi, each in the shape of a circular arc, are formed at intervals (regular intervals) in the circumferential direction in an inner peripheral portion of the second plate member 142W. The plurality of spring support portions 1421, each extending along the inner peripheral edge of a corresponding one of the inner spring accommodating windows 142wi, are formed at intervals (regular intervals) in the circumferential direction. The plurality of spring support portions 1422, each extending along the outer peripheral edge of a corresponding one of the inner spring accommodating windows 142wi, are formed at intervals (regular intervals) in the circumferential direction such that each spring support portion 1422 faces a corresponding one of the spring support portions 1421 in the radial direction of the second plate member 142W. The inner spring contact portions 142ci are formed such that one inner spring contact portion 142ci is located between two inner spring accommodating windows 142wi (spring support portions 1421, 1422) which are adjacent to each other in the circumferential direction.

The plurality of outer spring accommodating windows 142wo, each in the shape of a circular arc, are formed at intervals in the circumferential direction in an outer peripheral portion of the second plate member 142W so as to be located radially outside the inner spring accommodating windows 142wi. The plurality of spring support portions 1423, each extending along the inner peripheral edge of a corresponding one of the outer spring accommodating windows 142wo, are formed at intervals (regular intervals) in the circumferential direction. The plurality of spring support portions 1424, each extending along the outer peripheral edge of a corresponding one of the outer spring accommodating windows 142wo, are formed at intervals (regular intervals) in the circumferential direction such that each spring support portion 1424 faces a corresponding one of the spring support portions 1423 in the radial direction of the second plate member 142W. The outer spring contact portions 142co are formed such that one outer spring contact portion 142co is located between two outer spring accommodating windows 142wo (spring support portions 1423, 1424) which are adjacent to each other in the circumferential direction.

A driven member 16W of the damper device 10W includes an annular first plate member 161W, an annular second plate member 162W, and an annular third plate member 163W. The first plate member 161W has a plurality of spring contact portions 161c formed at intervals in the circumferential direction so as to extend radially outward from its inner peripheral portion, and the inner peripheral portion of the first plate member 161W is fixed to a turbine hub, not shown, via a plurality of rivets. The second plate member 162W has a plurality of spring accommodating windows 162w formed at intervals (regular intervals) in the circumferential direction, a plurality of spring support portions 1621 each extending along the inner peripheral edge of a corresponding one of the spring accommodating windows 162w, a plurality of spring support portions 1622 each extending along the outer peripheral edge of a corresponding one of the spring accommodating windows 162w, and a plurality of spring contact portions 162c. The plurality of spring contact portions 162c are formed such that one spring contact portion 162c is located between two spring accommodating windows 162w (spring support portions 1621, 1622) which are adjacent to each other in the circumferential direction. The second plate member 162W is coupled to the first plate member 161W so as to rotate therewith. With the first and second plate members 161W, 162W being coupled together, the plurality of spring contact portions 161c and the plurality of spring contact portions 162c are separated from each other in the axial and radial directions of the damper device 10W.

The third plate member 163W has a plurality of (e.g., three) spring accommodating windows 163w formed at intervals (regular intervals) in the circumferential direction, a plurality of spring support portions 1631 each extending along the inner peripheral edge of a corresponding one of the spring accommodating windows 163w, a plurality of spring support portions 1632 each extending along the outer peripheral edge of a corresponding one of the spring accommodating windows 163w, and a plurality of spring contact portions 163c. The plurality of spring contact portions 163c are formed such that one spring contact portion 163c is located between two spring accommodating windows 163w (spring support portions 1631, 1632) which are adjacent to each other in the circumferential direction. As shown in FIG. 8, the third plate member 163W is coupled (fixed) to the second plate member 162W via a plurality of rivets such that the spring support portions 1631, 1632 face corresponding spring support portions 1621, 1622 of the second plate member 162W.

As shown in FIG. 8, the first and second plate members 141W, 142W of the second intermediate member 14W are coupled such that each of the spring support portions 1411 to 1414 faces a corresponding one of the spring support portions 1421 to 1424. The spring support portions 1413, 1414 of the first plate member 141W and the spring support portions 1423, 1424 of the second plate member 142W each support (guide) a corresponding one of the third springs SP3. Moreover, the spring support portions 1411, 1412 of the first plate member 141W and the spring support portions 1421, 1422 of the second plate member 142W each support (guide) a corresponding one of the second springs SP2. The plurality of third springs SP3 are thus supported by the first and second plate members 141W, 142W so as to be located on the radially outer side of the damper device 10W and arranged at intervals in the circumferential direction. The plurality of fourth springs SP4 are supported by the first and second plate members 141W, 142W so as to be located radially inside the plurality of third springs SP3 and arranged at intervals in the circumferential direction. Moreover, the first plate member 111W of the drive member 11W is disposed between the outer spring contact portions 141co, 142co of the first and second plate members 141W, 142W in the axial direction. The first plate member 161W of the driven member 16W is disposed between the inner spring contact portions 141ci, 142ci of the first and second plate members 141W, 142W in the axial direction.

In the damper device 10W mounted in position, each spring contact portion 111c of the first plate member 111W of the drive member 11W is located between adjacent two of the third springs SP3 and contacts the ends of these two third springs SP3 in the circumferential direction. In the damper device 10W mounted in position, the outer spring contact portions 141co, 142co of the second intermediate member 14W contact those ends of the adjacent two third springs SP3 in the circumferential direction which do not contact the spring contact portion 111c of the drive member 11W. Moreover, in the damper device 10W mounted in position, the inner spring contact portions 141ci, 142ci of the second intermediate member 14W are located between adjacent two of the fourth springs SP4 and contact the ends of these two fourth springs SP4 in the circumferential direction. In the damper device 10W mounted in position, the spring contact portions 161c of the first plate member 161W of the driven member 16W contact those ends of the adjacent two fourth springs SP4 in the circumferential direction which do not contact the inner spring contact portions 141ci, 142ci of the second intermediate member 14W. The drive member 11W and the second intermediate member 14W are thus coupled via the plurality of third springs SP3 that act in parallel, and the second intermediate member 14W and the driven member 16W are coupled via the plurality of fourth springs SP4 that act in parallel. The drive member 11W and the driven member 16W are thus coupled via the plurality of third springs SP3, the second intermediate member 14W, and the plurality of fourth springs SP4.

As shown in FIG. 8, the spring contact portions 112c of the second plate member 112W of the drive member 11W and the spring contact portions 12c of the first intermediate member 12W are disposed between the second and third plate members 162W, 13W of the driven member 16W in the axial direction. The first and second springs SP1, SP2 are supported by corresponding spring contact portions 1621, 1622, 1631, 1632 of the driven member 16W, namely the second and third plate members 162W, 163W, such that the first and second springs SP1, SP2 are paired (each pair acts in series) and are alternately arranged in the circumferential direction (the circumferential direction of the first intermediate member 12W). Moreover, in the damper device 10W mounted in position, each spring contact portion 112c of the second plate member 112W of the drive member 11W is located between the first and second springs SP1, SP2 that are not paired (do not act in series), and contacts the ends of these two first and second springs SP1, SP2 in the circumferential direction. The spring contact portions 12c of the first intermediate member 12W are disposed between the second and third plate members 162W, 163W in the axial direction, and each spring contact portion 12c is located between the first and second springs SP1, SP2 that are paired (act in series), and contacts the ends of this pair of first and second springs SP1, SP in the circumferential direction 2. Moreover, in the damper device 10W mounted in position, like the spring contact portions 112c of the drive member 11W, each spring contact portion 162c, 163c of the driven member 16W is located between the first and second springs SP1, SP2 that are not paired (do not act in series), and contacts the ends of these two first and second springs SP1, SP2 in the circumferential direction. The drive member 11W and the driven member 16W are thus coupled via the plurality of first springs SP1, the first intermediate member 12W, and the plurality of second springs SP2.

In the above damper device 10W, the mounting radius rSP3 of the third springs SP3 is made larger than the mounting radii rSP1, rSP2, rSP4 of the first, second, and fourth springs SP1, SP2, SP4. The mounting radii rSP1, rSP2 of the first and second springs SP1, SP2 are equal to each other and are made larger than the mounting radius rSP4 of the fourth springs SP4. In the damper device 10W as well, the natural frequency (fR2) of the second intermediate member 14W is higher than that (fR1) of the first intermediate member 12W, and the average mounting radius ro of the third and fourth springs SP3, SP4 corresponding to the second intermediate member 14W having a higher natural frequency than the first intermediate member 12W is larger than the average mounting radius ri of the first and second springs SP1, SP2 corresponding to the first intermediate member 12. That is, the axes of the third springs SP3 having the largest spring constant (stiffness) among the first to fourth springs SP1 to SP4 are located outside the axes of the first and second springs SP1, SP2 (and the fourth springs SP4) in the radial direction of the damper device 10W. In the damper device 10W, the third springs SP3 are disposed radially outside the first and second springs SP1, SP2 (and the fourth springs SP4) so as to partially overlap the first and second springs SP1, SP2 in the radial direction as viewed in the axial direction.

This can further increase the torsion angle (stroke) of the third springs SP3 having high stiffness and can thus achieve reduction in stiffness of the third springs SP3 while allowing large torque to be transmitted to the drive member 11W. As a result, equivalent stiffness keq of the damper device 10W can further be reduced, and the frequency at which the resonance of the entire vibration system including the damper device 10W occurs can be shifted to the lower engine speed side (lower frequency side). Accordingly, in the damper device 10W as well, the frequency of the anti-resonance point A is made closer to that of the resonance of the entire vibration system, whereby the vibration damping capability can be very satisfactorily improved. Since the second intermediate member 14W supports the third springs SP3, the relative speed between the second intermediate member 14W and the third springs SP3 that are deflected according to the torsion angle of the second intermediate member 14W with respect to the drive member 11W and the driven member 16W can be reduced. This can reduce the friction force that is generated between the second intermediate member 14W and the third springs SP3 and can thus reduce hysteresis of the entire damper device 10W.

Moreover, the third springs SP3 are disposed outside the fourth springs SP4 in the radial direction of the damper device 10W, the first and second springs SP1, SP2 are disposed so as to be separated from the third and fourth springs SP3, SP4 in the axial direction of the damper device 10W, and the first and second springs SP1, SP2 are disposed on the same circumference. This can improve flexibility in setting the spring constants (stiffnesses), numbers, torsion angles (strokes), etc. of especially the third and fourth springs SP3, SP4. In the damper device 10W, the axes of the third springs SP3 and the axes of the fourth springs SP4 are included in a first plane perpendicular to the central axis CA. The axes of the first springs SP1 and the axes of the second springs SP2 are included in a second plane perpendicular to the central axis CA and separated from the first plane in the axial direction of the damper device 10W. This can restrain an increase in axial length of the damper device 10W. The axes of the third and fourth springs SP3, SP4 may not be included in the first plane perpendicular to the central axis CA, and the axes of the first and second springs SP1, SP2 may not be included in the second plane perpendicular to the central axis CA.

As described above, a damper device of the present disclosure is a damper device (10, 10X, 10Y, 10Z, 10W) including an input element (11, 11X, 11Y, 11Z, 11W) to which torque from an engine (EG) is transmitted, a first intermediate element (12, 12X, 12Y, 12Z, 12W), a second intermediate element (14, 14X, 14Y, 14Z, 14W), an output element (16, 16X, 16Y, 16Z, 16W), a first elastic body (SP11, SP1) that transmits the torque between the input element (11, 11X, 11Y, 11Z, 11W) and the first intermediate element (12, 12X, 12Y, 12Z, 12W), a second elastic body (SP12, SP2) that transmits the torque between the first intermediate element (12, 12X, 12Y, 12Z, 12W) and the output element (16, 16X, 16Y, 16Z, 16W), a third elastic body (SP21, SP3) that transmits the torque between the input element (11, 11X, 11Y, 11Z, 11W) and the second intermediate element (14, 14X, 14Y, 14Z, 14W), and a fourth elastic body (SP22, SP4) that transmits the torque between the second intermediate element (14, 14X, 14Y, 14Z, 14W) and the output element (16, 16X, 16Y, 16Z, 16W). A natural frequency (fR2) of the second intermediate element at the time the torque is transmitted from the input element to the output element via the third and fourth elastic bodies is higher than that (fR1) of the first intermediate element at the time the torque is transmitted from the input element to the output element via the first and second elastic bodies, and at least one of the third and fourth elastic bodies (SP21, SP3, SP22, SP4) is disposed radially outside the first and second elastic bodies (SP11, SP1, SP12, SP2).

In the damper device of the present disclosure, a first torque transmission path is formed between the input element and the output element by the first intermediate element and the first and second elastic bodies, and a second torque transmission path is formed between the input element and the output element by the second intermediate element and the third and fourth elastic bodies. In the damper device having such first and second torque transmission paths, an anti-resonance point can be set at which the vibration amplitude of the output element becomes theoretically equal to zero when vibration transmitted to the output element through the first torque transmission path becomes 180 degrees out of phase with respect to vibration transmitted to the output element through the second torque transmission path due to occurrence of resonance according to, e.g., the natural frequency of the second torque transmission path (second intermediate element). Moreover, since one of the third and fourth elastic bodies corresponding to the second intermediate element having a higher natural frequency is disposed radially outside the first and second elastic bodies corresponding to the first intermediate element having a lower natural frequency, the torsion angle of at least one of the third and fourth elastic bodies can further be increased. The stiffness of at least one of the third and fourth elastic bodies can thus further be reduced while allowing large torque to be transmitted to the input element. Equivalent stiffness of the damper device can therefore further be reduced, and the frequency at which the resonance of the entire vibration system including the damper device occurs can be shifted to a lower engine speed side (lower frequency side). Accordingly, the frequency of the anti-resonance point is made closer to that of vibration (resonance) to be damped by the damper device, whereby reduction in stiffness of the damper device can be achieved while restraining an increase in weight which is associated with adjustment of the natural frequencies of the first and second intermediate elements. Vibration damping capability can thus be improved.

An axis of at least one of the third and fourth elastic bodies (SP21, SP3, SP22, SP4) may be located radially outside axes of the first and second elastic bodies (SP11, SP1, SP12, SP2). That is, at least one of the third and fourth elastic bodies may be disposed so as to partially overlap at least one of the first and second elastic bodies in a radial direction as viewed in an axial direction.

One of the third and fourth elastic bodies (SP21, SP3) which has larger stiffness may be disposed radially outside the first and second elastic bodies (SP11, SP1, SP12, SP2). This can further reduce the equivalent stiffness of the damper device.

The stiffnesses of the third and fourth elastic bodies (SP21, SP3, SP22, SP4) may be larger than those of the first and second elastic bodies (SP11, SP1, SP12, SP2), and the third and fourth elastic bodies (SP21, SP3) may be disposed radially outside the first and second elastic bodies (SP11, SP1, SP12, SP2). Reduction in stiffnesses of the third and fourth elastic bodies can thus be achieved while allowing larger torque to be transmitted to the input element.

The stiffnesses $k11$, $k12$, $k21$, and $k22$ of the first to fourth elastic bodies (SP11, SP1, SP12, SP2, SP21, SP3, SP22, SP4) may be selected so as to satisfy $k12 < k21 = k22 < k11$. The stiffness $k11$ of the first elastic body can thus further be reduced, and the stiffness $k12$ of the second elastic body can also be reduced. Since the weights of the first and second elastic bodies are reduced due to their reduced stiffnesses, the friction force that is generated between the rotary element and the first and second elastic bodies, namely hysteresis, can further be reduced, and the natural frequency of the first intermediate element can further be reduced, whereby phase inversion of vibration transmitted from the second or fourth elastic body to the output element due to resonance of the first intermediate element can be quickly completed. As a result, a shift of the frequency at which vibration transmitted from the second elastic body to the output element becomes 180 degrees out of phase with respect to vibration transmitted from the fourth elastic body to the output element to a higher frequency side due to hysteresis can be satisfactorily reduced, and the vibration damping capability of the damper device can be more satisfactorily improved

The third and fourth elastic bodies (SP21, SP3, SP22, SP4) may be disposed next to each other in a circumferential direction. This can make the damper device compact in the radial direction.

The third elastic body (SP3) may be disposed radially outside the fourth elastic body (SP4), and the first and second elastic bodies (SP1, SP2) may be disposed so as to be separated from the third and fourth elastic bodies (SP3, SP4) in the axial direction. This can increase flexibility in setting the stiffnesses, numbers, torsion angles (strokes), etc. of the third and fourth elastic bodies.

The first and second elastic bodies (SP11, SP1, SP12, SP2) may be disposed next to each other in the circumferential direction. This can make the damper device compact in the radial direction.

The input element (11, 11X, 11Y, 11Z, 11W) may have a contact portion (111ci, 112ci, 111c, 112c, 113c) that contacts an end of the first elastic body (SP11, SP1) in the circumferential direction and a contact portion (111co, 112co, 111c, 112c) that contacts an end of the third elastic body (SP21) in the circumferential direction. The output element (16, 16X, 16Y, 16Z, 16W) may have a contact portion (16ci, 161c, 162ci, 162c, 163c) that contacts an end of the second elastic body (SP12, SP2) and a contact portion (16co, 162co, 162c) that contacts an end of the fourth elastic body (SP22) in the circumferential direction. The first intermediate element (12, 12X, 12Y, 12Z, 12W) may have a contact portion (121c, 122c, 12c, 121co, 122co) that contacts an end of the first elastic body (SP11, SP1) in the circumferential direction and a contact portion (121c, 122c, 12c, 121ci, 122ci) that contacts an end of the second elastic body (SP12, SP2) in the circumferential direction. The second intermediate element (14, 14X, 14Y, 14Z, 14W) may have a contact portion (14c, 14ca, 14cb, 141co, 142co) that contacts an end of the third elastic body (SP21, SP3) in the circumferential direction and a contact portion (14c, 14ca, 14cb, 141ci, 142c) that contacts an end of the fourth elastic body (SP22, SP4) in the circumferential direction.

A moment of inertia (J21) of the first intermediate element (12, 12X, 12Y, 12Z, 12W) may be larger than that (J22) of the second intermediate element (14, 14X, 14Y, 14Z, 14W). The natural frequency of the first intermediate element can thus further be reduced, and the vibration level near the anti-resonance point can further be reduced.

The first intermediate element (12, 12X, 12Y, 12Z, 12W) may be coupled to a turbine runner (5) of a hydraulic transmission device so as to rotate therewith. A substantial moment of inertia of the first intermediate element (the sum of the moments of inertia) can thus further be increased, whereby the natural frequency of the first intermediate element can further be reduced.

The torque from the engine (EG) may be transmitted to the input element (11, 11X, 11Y, 11Z, 11W) via a lockup clutch (8). A lockup engine speed (Nlup) of the lockup clutch (8) may be higher than an engine speed corresponding to the natural frequency (fR1) of the first intermediate element (12, 12X, 12Y, 12Z, 12W) at the time the torque is transmitted from the input element (11, 11X, 11Y, 11Z, 11W) to the output element (16, 16X, 16Y, 16Z, 16W) via the third and fourth elastic bodies, and may be lower than an engine speed corresponding to the natural frequency (fR2) of the second intermediate element (14, 14X, 14Y, 14Z, 14W) at the time the torque is transmitted from the input element to the output element via the first and second elastic bodies. The engine speed corresponding to the natural frequency of the first intermediate element is thus included in a non-lockup region of the lockup clutch. This allows one of vibration transmitted from the second elastic body to the output element and vibration transmitted from the fourth elastic body to the output element to at least partially cancel the other vibration from the time the lockup coupling is performed by the lockup clutch.

The first to fourth elastic bodies (SP11, SP1, SP12, SP2, SP21, SP3, SP22, SP4) may be allowed to deflect until the torque (T) transmitted to the input element (11, 11X, 11Y, 11Z, 11W) becomes equal to or larger than a predetermined threshold (T1). This can satisfactorily improve the vibration damping capability of the damper device in the case where the torque transmitted to the input element is relatively small and the rotational speed of the input element is low.

Moreover, the output element (16, 16X, 16Y, 16Z, 16W) may be operatively (directly or indirectly) coupled to an input shaft (IS) of a transmission (TM), and the input element (11, 11X, 11Y, 11Z, 11W) may be operatively (directly or indirectly) coupled to an output shaft of the engine (EG).

The invention of the present disclosure is not limited in any way to the above embodiments, and it is to be understood that various modifications may be made without departing from the spirit and scope of the present disclosure. The above embodiments merely show specific forms of the invention described in the section "SUMMARY OF THE INVENTION" and are not intended to limit the elements of the invention described in the section "SUMMARY OF THE INVENTION."

INDUSTRIAL APPLICABILITY

The invention of the present disclosure can be utilized in the field of manufacture of damper devices, etc.

**Claims**

1. A damper device including an input element to which torque from an engine is transmitted, a first intermediate element, a second intermediate element, an output element, a first elastic body that transmits the torque between the input element and the first intermediate element, a second elastic body that transmits the torque between the first intermediate element and the output element, a third elastic body that transmits the torque between the input element and the second intermediate element, and a fourth elastic body that transmits the torque between the second intermediate element and the output element, wherein

a natural frequency of the second intermediate element at the time the torque is transmitted from the input element to the output element via the third and fourth elastic bodies is higher than that of the first intermediate element at the time the torque is transmitted from the input element to the output element via the first and second elastic bodies, and
at least one of the third and fourth elastic bodies is disposed radially outside the first and second elastic bodies.

2. The damper device according to claim 1, wherein
an axis of at least one of the third and fourth elastic bodies is located radially outside axes of the first and second elastic bodies.

3. The damper device according to claim 1 or 2, wherein
a larger one of stiffness of the third elastic body and stiffness of the fourth elastic body is smaller than a larger one of stiffness of the first elastic body and stiffness of the second elastic body, and one of the third and fourth elastic bodies is disposed radially outside the first and second elastic bodies.

4. The damper device according to any one of claims 1 to 3, wherein
the third and fourth elastic bodies are disposed radially outside the first and second elastic bodies.

5. The damper device according to any one of claims 1 to 4, wherein
stiffnesses $k11$, $k12$, $k21$, and $k22$ of the first to fourth elastic bodies are selected so as to satisfy $k12 < k21 = k22 < k11$.

6. The damper device according to any one of claims 1 to 5, wherein
the third and fourth elastic bodies are disposed next to each other in a circumferential direction.

7. The damper device according to any one of claims 1 to 3, wherein
the third elastic body is disposed radially outside the fourth elastic body, and the first and second elastic bodies are disposed so as to be separated from the third and fourth elastic bodies in an axial direction.

8. The damper device according to any one of claims 1 to 7, wherein
the first and second elastic bodies are disposed next to each other in a circumferential direction.

9. The damper device according to any one of claims 1 to 8, wherein

the input element has a contact portion that contacts an end of the first elastic body in a circumferential direction and a contact portion that contacts an end of the third elastic body in the circumferential direction,
the output element has a contact portion that contacts an end of the second elastic body in circumferential direction and a contact portion that contacts an end of the fourth elastic body in the circumferential direction,
the first intermediate element has a contact portion that contacts an end of the first elastic body in the circumferential direction and a contact portion that contacts an end of the second elastic body in the circumferential direction, and
the second intermediate element has a contact portion that contacts an end of the third elastic body in the circumferential direction and a contact portion that contacts an end of the fourth elastic body in the circumferential direction.

10. The damper device according to any one of claims 1 to 9, wherein
a moment of inertia of the first intermediate element is larger than that of the second intermediate element.

11. The damper device according to any one of claims 1 to 10, wherein
the first intermediate element is coupled to a turbine runner of a hydraulic transmission device so as to rotate with the turbine runner.

12. The damper device according to any one of claims 1 to 11, wherein

the torque from the engine is transmitted to the input element via a lockup clutch, and

a lockup engine speed of the lockup clutch is higher than an engine speed corresponding to the natural frequency of the first intermediate element at the time the torque is transmitted from the input element to the output element via the third and fourth elastic bodies, and is lower than an engine speed corresponding to the natural frequency of the second intermediate element at the time the torque is transmitted from the input element to the output element via the first and second elastic bodies.

13. The damper device according to any one of claims 1 to 12, wherein
the first to fourth elastic bodies are allowed to deflect until the torque transmitted to the input element becomes equal to or larger than a predetermined threshold.

14. The damper device according to any one of claims 1 to 13, wherein
the output element is operatively coupled to an input shaft of a transmission.

FIG. 1

# FIG. 2

# FIG. 3

FIG. 4

# FIG. 5

# FIG. 6

# FIG. 7

# FIG. 8

**INTERNATIONAL SEARCH REPORT**

| International application No. |
| --- |
| PCT/JP2017/027828 |

A. CLASSIFICATION OF SUBJECT MATTER
*F16F15/134*(2006.01)i, *F16H45/02*(2006.01)i

According to International Patent Classification (IPC) or to both national classification and IPC

B. FIELDS SEARCHED

Minimum documentation searched (classification system followed by classification symbols)
F16F15/134, F16H45/02

Documentation searched other than minimum documentation to the extent that such documents are included in the fields searched
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | WO 2016/021668 A1 (Aisin AW Co., Ltd.), 11 February 2016 (11.02.2016), claims; paragraphs [0012] to [0063]; fig. 1 to 3 & US 2017/0159746 A1 paragraphs [0015] to [0060]; fig. 1 to 3 | 1-14 |
| Y | JP 2012-506006 A (Schaeffler Technologies GmbH & Co. KG), 08 March 2012 (08.03.2012), paragraphs [0017] to [0025]; fig. 3 to 5A & US 2010/0096788 A1 paragraphs [0027] to [0035]; fig. 3 to 5A & WO 2010/043301 A1 | 1-14 |

☒ Further documents are listed in the continuation of Box C.    ☐ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 12 October 2017 (12.10.17) | 24 October 2017 (24.10.17) |

| Name and mailing address of the ISA/ | Authorized officer |
| --- | --- |
| Japan Patent Office 3-4-3,Kasumigaseki,Chiyoda-ku, Tokyo 100-8915,Japan | Telephone No. |

Form PCT/ISA/210 (second sheet) (January 2015)

36

**INTERNATIONAL SEARCH REPORT**

| International application No. |
| --- |
| PCT/JP2017/027828 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | WO 2016/039483 A1 (Aisin AW Co., Ltd.), 17 March 2016 (17.03.2016), paragraphs [0122], [0138] & US 2017/0227088 A1 paragraphs [0125], [0141] & WO 2016/159325 A1 & WO 2016/159326 A1 & WO 2016/159328 A1 & WO 2016/199806 A1 & EP 3159574 A1 | 3-14 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012506006 W

- JP 2012506006 A